# EUROPEAN PATENT SPECIFICATION

(11) **EP 3 248 341 B1**
(45) Date of publication and mention of the grant of the patent: **24.11.2021**
(21) Application number: 15879258.0
(22) Date of filing: 22.12.2015
(51) Int. Cl.: H04W 48/06, H04W 28/02, H04L 12/859

(54) **APPLICATION SPECIFIC CONGESTION CONTROL FOR DATA COMMUNICATIONS**
ANWENDUNGSSPEZIFISCHE ÜBERLASTUNGSSTEUERUNG FÜR DATENKOMMUNIKATION
RÉGULATION DE CONGESTION SPÉCIFIQUE D'UNE APPLICATION POUR LES COMMUNICATIONS DE DONNÉES

(30) Priority: 22.01.2015 US 201562106431 P
(43) Date of publication of application: 29.11.2017
(73) Proprietor: Apple Inc., Cupertino, CA 95014 (US)
(72) Inventor: PINHEIRO, Ana Lucia, Santa Clara, CA 95054 (US); MARTINEZ TARRADELL, Marta, Hillsboro, Oregon 97124 (US); ZAUS, Robert, 80686 Munchen (DE); CHIN, Chen-ho, 8540 Deerlijk (BE); BURBIDGE, Richard C., Shrivenham, Oxfordshire SN6 8HR (GB); KOLDE, Martin, 85579 Neubiberg (DE)
(74) Representative: Wardle, Callum Tarn
(86) International application number: PCT/US2015/067378
(87) International publication number: WO 2016/118282

(56) References cited:
- WO-A1-2014/160611
- WO-A1-2014/160611
- WO-A1-2014/183254
- WO-A1-2015/148013
- KR-A- 20140 140 595
- US-A1- 2013 045 706
- US-A1- 2013 045 706
- US-A1- 2014 269 279
- INTEL CORPORATION: "An approach to ACDC work in CT1", 3GPP DRAFT; C1-143547 ACDC MO DISC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Sophia Antipolis (France); 20141020 - 20141024 17 October 2014 (2014-10-17), XP050873124, Retrieved from the Internet: URL:http://www.3gpp.org/ftp/Meetings_3GPP_ SYNC/CT1/Docs/ [retrieved on 2014-10-17]
- INTEL CORPORATION ET AL: "Levels and Categories in ACDC", 3GPP DRAFT; S1-140014 - LEVELS AND CATEGORIES IN ACDC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG1, no. Taipei, Taiwan; 20140120 - 20140124 19 January 2014 (2014-01-19), XP050743436, Retrieved from the Internet: URL:http://www.3gpp.org/ftp/Meetings_3GPP_ SYNC/SA/SA1/Docsstatus/docs/ [retrieved on 2014-01-19]
- QUALCOMM INCORPORATED: "ACDC System Overview", 3GPP DRAFT; S1-141105__ACDC SYSTEM OVERVIEW - ANNEX, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG1, no. Sapporo, Japan; 20140512 - 20140516 11 May 2014 (2014-05-11), XP050803584, Retrieved from the Internet: URL:http://www.3gpp.org/ftp/Meetings_3GPP_ SYNC/SA1/Docs/ [retrieved on 2014-05-11]

## Description

### TECHNICAL FIELD

Embodiments pertain to computer readable media comprising instructions for execution by one or more processors of a user equipment and apparatus for user equipments, and particularly to Application specific Congestion control for Data Communication (ACDC) for long term evolution (LTE), LTE- advanced, and other similar wireless communication systems.

### BACKGROUND

LTE and LTE-advanced are standards for wireless communication of high-speed data for user equipment (UE) such as mobile telephones. As usage of wireless data networks increase, efficient use of network resources, particularly when a network is at or near its capacity limits, may call for managed usage of the resources. In some communication systems, congestion control may be implemented to manage system operation and to regulate usage of a data network by various devices. Unlike voice communications, where continuous network access is needed to maintain a voice communication link, data communications, in some situations, do not require the same level of continuous network usage.

The object to be solved by the present application consists in providing efficient use of network resources and congestion control.

US 2013/045706 A1 relates to enhanced access control in LTE Advanced systems. An enhanced access control method is proposed for machine-type communications (MTC) in a 3GPP LTE-Advanced network. An MTC device is configured for enhanced access barring (EAB). When the MTC device attempts access to the network, the NAS layer checks whether EAB is applicable for the MTC device. If yes, then the NAS layer forwards EAB configuration to the AS layer for further EAB control. Based on the EAB configuration, a base station broadcasts EAB information to UEs via system information block. The EAB information indicates whether barring is applied to a number of EAB categories and a number of access classes. Based on the EAB information, the MTC devices performs EAB for access attempt to RRC. If access is not barred under EAB, then the MTC device further performs ACB for access attempt to RRC.

3GPP Tdoc. C1-143547, "An approach to ACDC work in CT1", 3GPP TSG CT WG1 Meeting #88bis, October 2014 teaches that the best way forward to fulfil the requirement on provisioning of ACDC data on the mobile is to introduce a new Management Object for ACDC specific use.

3GPP Tdoc. S1-140014, "levels and categories in ACDC", 3GPP TSG-SA WG1 Meeting #65, January 2014 discloses that the system shall be able to support the activation of different ACDC levels to gracefully accommodate the changing of urgency or congestion.

WO 2015/148013 A1 relates to use of an OMA management object to support application-specific congestion control in mobile networks. Technology for using an open mobile alliance (OMA) management object (MO) for congestion control in mobile networks is described. A novel type of OMA MO for application specific access control (ASAC) can include internet protocol (IP) flow descriptions that can be used to characterize applications with fine granularity. Priorities can be assigned to IP flows based on the IP flow descriptions. A user equipment (UE) can receive such an OMA MO and also receive application-barring information regarding a congestion level in a mobile network with which an application at the UE wishes to connect. The UE can have a connectivity manager (CM) that determines whether to allow the application to establish a connection with the mobile network based on the priority level of the application's associated IP flow and the application-barring information.

WO 2014/160611 A1 relates to provisioning of application categories at a user equipment during network congestion. A registration update message may be received at a wireless network element from the UE over non-access stratum (NAS) signaling. Application Specific Congestion Control for Data Communications (ACDC)/Application and Service Access Control (ASAC) information may be communicated from the wireless network element to the UE in response to receiving the registration update message. The ACDC/ASAC may be activated at a selected prioritization level, at the wireless network element, while a wireless network channel condition of a wireless network exceeds a capacity threshold, the ACDC/ASAC enabling only application categories to operate at the UE that are contained in the ACDC/ASAC information.

### SUMMARY

The object of the present application is solved by the independent claims. Advantageous embodiments are described by the dependent claims. According to a first aspect, the invention provides a non-transitory computer readable medium as defined in claim 1. According to a further aspect, the invention provides an apparatus of a user equipment (UE) as defined in claim 13.

### BRIEF DESCRIPTION OF THE DRAWINGS

FIG. 1 is a block diagram of a system including an evolved node B (eNB) and user equipment (UE) that may operate according to some embodiments described herein.
FIG. 2 is a block diagram illustrating additional details of a UE in communication with an eNB that may operate according to some embodiments described herein.
FIG. 3 is a block diagram illustrating additional details of a UE in communication with an eNB that may operate according to some embodiments described herein.
FIG. 4 describes a method for application specific congestion control, according to some embodiments described herein.
FIG. 5 is a block diagram illustrating additional details of a UE in communication with an eNB that may operate according to some embodiments described herein.
FIG. 6 describes a method for application specific congestion control, according to some embodiments described herein.
FIG. 7 illustrates aspects of a computing machine, according to some example embodiments.
FIG. 8 illustrates aspects of a UE, in accordance with some example embodiments.
FIG. 9 is a block diagram illustrating an example computer system machine which may be used in association with various embodiments described herein.
FIG. 10 illustrates aspects of a UE, in accordance with some example embodiments.

### DETAILED DESCRIPTION

Embodiments relate to systems, devices, apparatus, assemblies, methods, and computer readable media to enhance wireless communications, and particularly to communication systems that operate with application specific congestion control for data communications. The following description and the drawings illustrate specific embodiments to enable those skilled in the art to practice them. Other embodiments can incorporate structural, logical, electrical, process, and other changes.

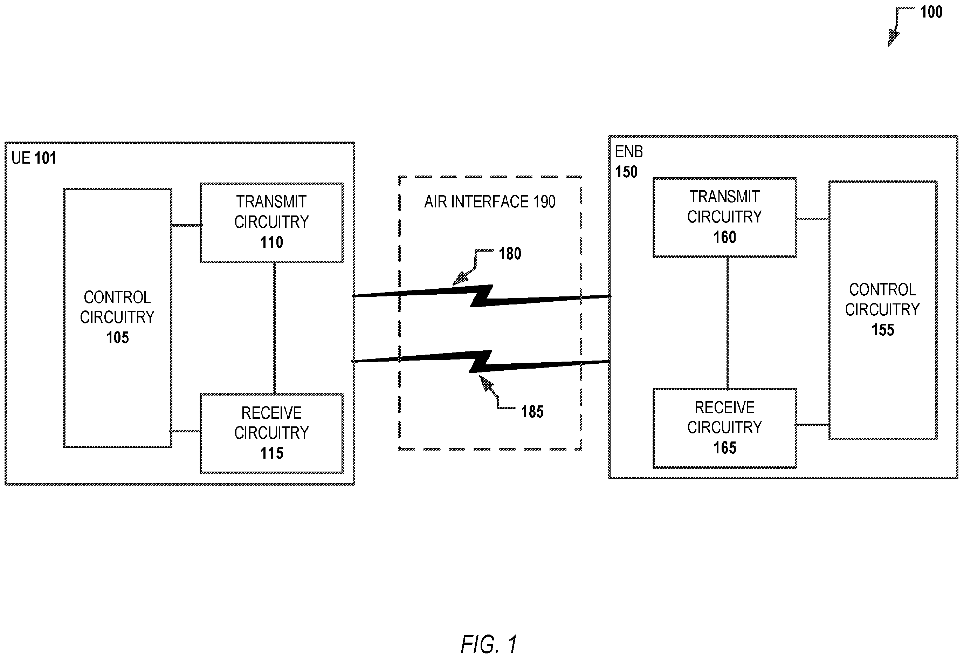

FIG. 1 illustrates a wireless network 100, in accordance with some embodiments. The wireless network 100 includes a UE 101 and an eNB 150 connected via one or more channels 180, 185 across an air interface 190. UE 101 and eNB 150 communicate using a system that supports ACDC for managing the access of UE 101 to a network via eNB 150.

In wireless network 100, the UE 101 and any other UE in the system may be, for example, laptop computers, smartphones, tablet computers, printers, machine-type devices such as smart meters or specialized devices for healthcare monitoring, remote security surveillance, an intelligent transportation system, or any other wireless devices with or without a user interface. The eNB 150 provides the UE 101 network connectivity to a broader network (not shown). This UE 101 connectivity is provided via the air interface 190 in an eNB service area provided by the eNB 150. In some embodiments, such a broader network may be a wide area network operated by a cellular network provider, or may be the Internet. Each eNB service area associated with the eNB 150 is supported by antennas integrated with the eNB 150. The service areas are divided into a number of sectors associated with certain antennas. Such sectors may be physically associated with fixed antennas or may be assigned to a physical area with tunable antennas or antenna settings adjustable in a beamforming process used to direct a signal to a particular sector. One embodiment of the eNB 150, for example, includes three sectors each covering a 120 degree area with an array of antennas directed to each sector to provide 360 degree coverage around the eNB 150.

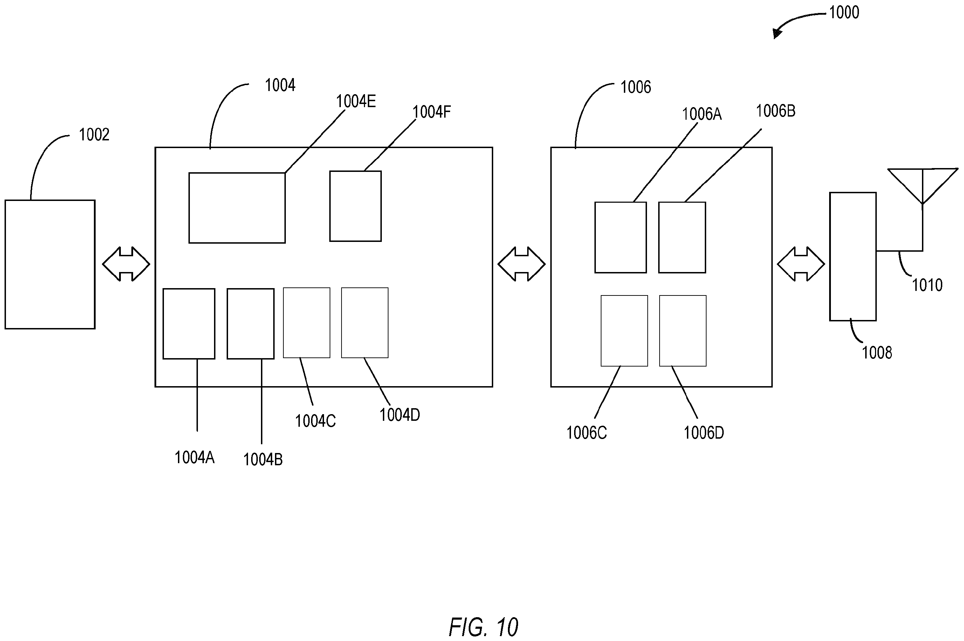

The UE 101 includes control circuitry 105 coupled with transmit circuitry 110 and receive circuitry 115. The transmit circuitry 110 and receive circuitry 115 may each be coupled with one or more antennas. The control circuitry 105 may be adapted to perform operations associated with wireless communications using congestion control. Control circuitry 110 may include various combinations of application specific circuitry and baseband circuitry. The transmit circuitry 110 and receive circuitry 115 may be adapted to transmit and receive data, respectively, and may include radio frequency (RF) circuitry or front end module (FEM) circuitry. In various embodiments, aspects of transmit circuitry 110, receive circuitry 115, and control circuitry 105 may be integrated in various ways to implement the circuitry described in FIG. 10 below. The control circuitry 105 may be adapted or configured to perform various operations such as those described elsewhere in this disclosure related to a UE. The transmit circuitry 110 may transmit a plurality of multiplexed uplink physical channels. The plurality of uplink physical channels may be multiplexed according to time division multiplexing (TDM) or frequency division multiplexing (FDM) along with carrier aggregation. The transmit circuitry 110 may be configured to receive block data from the control circuitry 105 for transmission across the air interface 190. Similarly, the receive circuitry 115 may receive a plurality of multiplexed downlink physical channels from the air interface 190 and relay the physical channels to the control circuitry 105. The plurality of downlink physical channels may be multiplexed according to TDM or FDM along with carrier aggregation. The transmit circuitry 110 and the receive circuitry 115 may transmit and receive both control data and content data (e.g. messages, images, video, etc.) structured within data blocks that are carried by the physical channels.

For additional information, FIG. 1 also illustrates the eNB 150 (this does not form part of the claimed subject-matter). The eNB 150 circuitry may include control circuitry 155 coupled with transmit circuitry 160 and receive circuitry 165. The transmit circuitry 160 and receive circuitry 165 may each be coupled with one or more antennas that may be used to enable communications via the air interface 190.

The control circuitry 155 may be adapted to perform operations for managing channels and congestion control communications used with various
UEs, including communication of open mobile alliance (OMA) management object (OMA-MO) describing application categories as detailed further below. The transmit circuitry 160 and receive circuitry 165 may be adapted to transmit and receive data, respectively, to any UE connected to eNB 150. The transmit circuitry 160 may transmit downlink physical channels comprised of a plurality of downlink subframes. The receive circuitry 165 may receive a plurality of uplink physical channels from various UEs including UE 101.

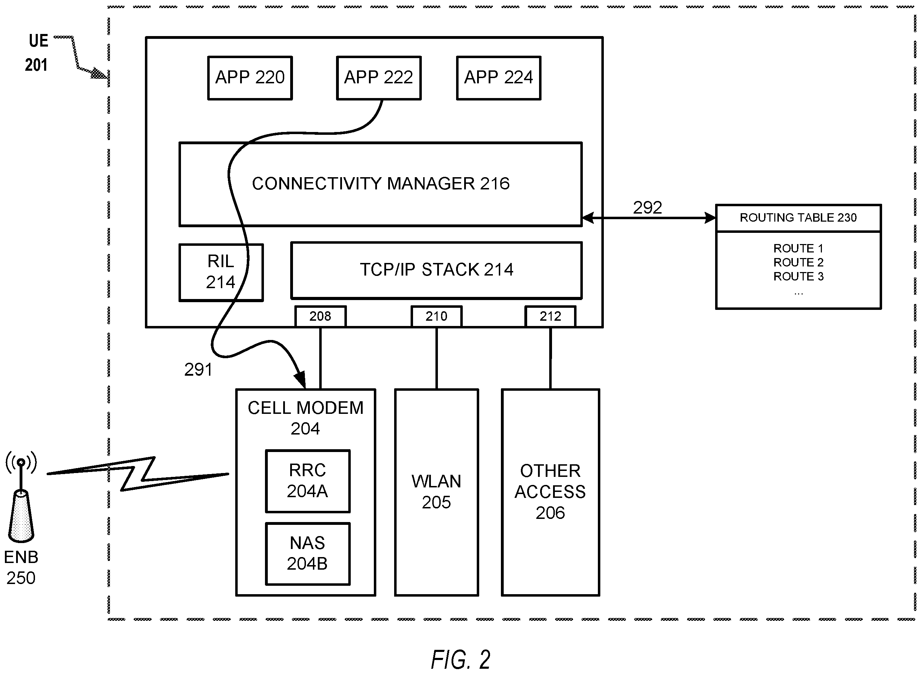

FIG. 2 is a block diagram illustrating additional details of a UE 201 in communication with an eNB 250 that may operate according to some embodiments described herein. FIG. 2 provides an abstraction of various operational layers, modules, and applications that operate on hardware of UE 201 (e.g. one or more processors and memory). As illustrated, UE 201 includes applications 220, 222, and 224; connectivity manager (CM) 216; radio interface layer (RIL) 214; transmission control protocol (TCP)/internet protocol (IP) stack 214; routing table 230; network interfaces 208, 210, and 212; cellular modem 204; wireless local area network (WLAN) circuitry 205; and other access circuitry 206. Radio resource control (RRC) 204A and non-access stratum (NAS) 204B are included in cellular modem 204.

For a UE 201 supporting connectivity via multiple access technologies, the UE may include a functional entity for each access technology (e.g., one entity called cellular modem 204 for third generation partnership project (3GPP) access, another one called WLAN circuitry 205 for WLAN access, and other access circuitry 206). In such embodiments, a functional entity illustrated as CM 216 is responsible for managing an access technology and for establishing and maintaining the connectivity. In some embodiments, these functional entities may be implemented on separate apparatuses (e.g., separate integrated circuits) while in other embodiments these may be integrated in a single apparatus, circuit, or assembly.

For Over the Top (OTT) applications, the CM 216 itself is requesting and handling the establishment of a packet data network (PDN) connection with an associated access point name (APN). This may be done at UE 201 without prior request from a specific application. In this case, the APN is usually called the "Internet APN" or "Default APN." After the PDN connection is established, the CM 204 creates a default route for the PDN connection and its associated Network Interface 208 in the routing table(s) 230. This is the default case when no WLAN circuit 205 connection is available. If a WLAN circuit 205 connection is available, the operation the CM 216 depends on whether in-parallel to the WLAN circuit 205 connection, an Internet-APN/PDN connection over cellular modem 204 is to be established.

In the example of FIG. 2, a request 291 from the application 222 is conveyed by the CM 216 to the RIL 214, and then from the RIL 214 to the Cellular Modem 204. After the request 291 is successfully served, the CM 216 updates a routing table 230 corresponding with the connection in update 292. The TCP/IP stack 214 may use the routing table 230 to determine the network interface 208, 210, or 212 to be used for the routing of application data packets received from an application 220, 222, or 224. In some embodiments, TCP/IP stack 214 may manage some aspects of routing table 230.

In some embodiments with a CM 216, for ACDC to be applied, the CM 216 determines an application identifier (ID) of application 222 when the application begins communicating, and the RRC 204A receives the ACDC broadcast information. In some embodiments the RRC 204A determines whether UE 201 is in a connected mode or not. Then NAS 204B can evaluate the ACDC parameters (details of an OMA-MO are discussed below) and perform a mapping from the application identifier to an ACDC category. In other examples not covered by the scope of the claims, one of the entities CM 216, RRC 204A, or some other entity, can evaluate the ACDC parameters and perform the mapping. The entity (NAS 204B) performing this operation can use the application identifier from CM 216. The ACDC category is also provided to the entity that is performing an ACDC check to make a decision as to whether the application requesting access is allowed network access or not. In other examples not covered by the scope of the claims, the entity making this decision may be any entity listed above in various embodiments, including entities not specifically detailed in UE 201. This entity uses the broadcast ACDC information and the information about whether UE 201 is in a connected mode in order to make the access decision for each application requesting network access. This entity may also operate with category or application specific back-off timers. In some embodiments, a different entity further down the protocol stack may implement back-off timers associated with particular applications 220, 222, 224, or other applications, or back-off timers associated with specific categories.

While not covered by the appended claims, it is possible that all of the above may be done by CM 216, including the mapping from an application identifier to an ACDC category, an access decision, and a back-off timer operation. In such cases, CM 216 informs RRC 204A that ACDC checks have been passed successfully and access class barring (ACB) can be skipped.

In other cases (also not forming part of the claimed subject-matter), the mapping from application identifiers to ACDC categories, access decisions, and back-off timer operation could all be performed in RRC 204A. Some such embodiments may operate without a CM 216. In still further embodiments, actions may be distributed over several layers as detailed in the embodiments below.

In various embodiments, RRC 204A reads ACDC information in a broadcast channel from eNB 250. RRC 204A applies ACDC parameters in order to decide if UE 201 can initiate an RRC connection establishment procedure. ACDC can be simply an ACB skip functionality for certain application categories or it could provide parameters similar to ACB (e.g., ACB functions including probability of access barring and barring time).

In such embodiments, RRC 204A identifies an ACDC category of the application (e.g., application 222) that is starting. In accordance with the invention, NAS 204B provides the ACDC category of the application that started the request. In alternative examples not covered by the scope of the claims, NAS 204B provides a mapping of the applications (e.g., applications 220, 222, 224) to application identifiers and then provides an identifier of the application that started the request. Based on the information on ACDC category, together with the broadcast information, RRC 204A can apply ACDC or ACB. RRC 204A thus reads broadcast information on ACDC and receives information (e.g., identifier and/or category information) from NAS 204B about an application associated with a network access request or communication. RRC 204A also applies ACDC or ACB based on this information. According to the invention, operation is facilitated by OMA-MO files including application category information as detailed below.

When using an OMA-MO format, NAS 204B is responsible for reading the OMA-MO data. Where NAS 204B reads an OMA-MO file, various different processes may implement aspects of ACDC. In some examples not covered by the claims, OMA-MO information can be shared by NAS 204b with the CM 216. In other examples not covered by the claims, OMA-MO information can optionally also be shared with the RRC 204A as a list of all categories and all applications that belong to each category. According to the invention, when a request is initiated by an application 220, 222, 224, etc., the NAS 204B provides to RRC 204A the ACDC category of the application that started the request. In other examples not covered by the claims, NAS 204b provides to RRC 204a the identifier of the application that started the request. In such examples, NAS 204B operates so that RRC is provided details of a map of application identifiers onto ACDC categories in order for UE 201 to perform ACDC.

In some embodiments, NAS 204B operates such that when a service request procedure is barred due to ACB, the RRC 204A will notify the barring condition to the NAS 204B and the NAS 204B will not initiate a new service request procedure until the RRC 204A notifies the NAS 204B that the congestion situation is alleviated. This may be considered a "bailing time." Thus, in some embodiments, a bailing time is ended by a communication from RRC 204A to NAS 204B specifying that the bailing time is complete. This bailing time may be controlled in RRC 204A by a timer, a notification from eNB 250 updating network conditions, or any other such processes for determining that an appropriate time for blocking an application from accessing a network is over. In order to be able to bypass this requirement to not initiate a new service request procedure for requests coming from applications in the ACDC list, various embodiments may operate as follows: in a first option, RRC 204A sends the ACDC indication to the NAS 204B to indicate that ACDC is activated. The ACDC indication also includes data about the ACDC level and other related ACDC information. In such embodiments, from the point when ACDC is activated on, NAS 204B will ignore the barring indication (e.g., ACB bailing due to congestion) for any applications until ACDC is deactivated. In other embodiments, RRC 204A sends the ACDC indication to the NAS 204B to indicate ACDC is activated as well as providing the ACDC category level and other related information. The category level as referred to herein is a position in the ACDC category structure when the ACDC is organized with hierarchical categories from a lowest to a highest priority, or from a highest to lowest priority. From this point on, NAS 204B will ignore the barring indication for requests coming from an application belonging to an ACDC category higher than the ACDC category level barred, until ACDC is deactivated. In still further embodiments, NAS 204B will ignore the barring indication (ACB barring due to congestion) for requests coming from an application identified in the ACDC list, regardless of whether or not ACDC is activated. In still further embodiments, the functionality of barring of a request in the NAS 204B is completely removed from the NAS procedures. NAS will always forward any request to the RRC, regardless of whether or not ACDC is activated, and any ACDC will be managed by RRC 204A.

In embodiments using a CM 216 or other circuitry or modules implementing similar management functionality, when a request is initiated by an application via CM 216, embodiments may use various implementations to manage ACDC connectivity. In a first embodiment, CM 216 provides to NAS 204B the ACDC category that started the request. This may be implemented where CM 216 may send a request to the NAS 204B to inquire if an application is part of a category and then NAS 204B will respond providing the category to which the application belongs. Alternatively, NAS 204B may share the entire ACDC information, or a combination list of all categories and all applications that belong to each category, with the CM 216. In other implementations, CM 216 may read the information directly (e.g., CM 216 may read an OMA-MO file). In another embodiment, CM 216 provides only the identifier of the application that started the request to the NAS 204B.

The above embodiments use ACDC indication communications comprising ACDC parameters. The ACDC indications may be structured as part of an existing system information block (SIB), e.g., SIB2. In other embodiments, a new SIB-like structure may be used. This ACDC indication may be received by all UEs in a system or communicating with an eNB, assuming that the ACDC functionality is mandatory within a system to be supported by all UEs. No additional ACDC details would be required by the UE in such a case. In other embodiments where ACDC is not mandatory, ACDC indications may be received only by UEs that support ACDC functionality. In such embodiments, an SIB may be structured to be received by UEs that support ACDC, or an indication may be included in a new or existing SIB indicating that the network supports an ACDC mechanism that will be used in communications between the supporting UEs and the supporting elements of the network.

If the UE and eNB both support the ACDC functionality, the ACDC indication would be checked by the UE on a regular basis in order to use the updated information following legacy periodicity and a legacy modification period. Alternatively, these ACDC parameters might be allowed to be changed more frequently similar to public warning systems (PWS) notifications such as standardized earthquake and tsunami warning system (ETWS) notifications.

These ACDC parameters may be broadcasted in different ways. Particular embodiments for a stage-3 text are described. It will be apparent that other implementations are possible within the scope of the present innovations. For example, some embodiments may use SIB2 or other new SIB structures; however, a similar concept could apply to other SIBs or a new SIB replacement structure. In one embodiment, the network indicates a congestion/barring level for each ACDC category. The categories are barred differently depending on a priority for each category. For allowed categories, whitelists may be used, and with whitelist usage for ACDC functionality, the network would broadcast the ACDC parameter indication/information for all the ACDC categories allowed. In embodiments using a blacklist approach, the network would broadcast the ACDC parameters indication/information for all the ACDC categories that are not allowed. For example, for the case of a whitelist and assuming that ACDC category 1 is the most probable to be allowed and ACDC category 5 is the least probable, the network might broadcast ACDC indications for categories 1-3, which would mean that ACDC categories 4 and 5 would be fully barred.

In some embodiments, the network only indicates the ACDC category that determines the range of ACDC categories allowed or not allowed, depending on whether ACDC is defined as a whitelist or blacklist operation. For example, assuming that ACDC is defined as a whitelist, and there are 5 ACDC categories and ACDC category 1 is the category with highest priority, the network at a certain instant may indicate that the threshold is ACDC category 2, which would be understood by the UE as only allowing network access to applications associated with categories 1 and 2. In other implementations, any number of categories may be used with any possible structure for indicating allowable or barred applications or groups of applications.

In embodiments where ACDC parameters provide a simple indication that an ACDC category is allowed, there are new IEs sent when the ACDC category is allowed. For example:

```
  (1) acdc-Category-r13 INTEGER (1...maxACDC-r13)
```

could also be a list of the index of all the categories allowed or an ACDC threshold.

In embodiments where access barring configuration indications are provided indicating whether or not the ACDC category is allowed, the network provides an access barring indication for the ACDC categories that are allowed. In some embodiments, the network may need to add an index or reference of the ACDC category that is being indicated. In other embodiments, an ACDC listing may be used where the order implicitly defines the category (e.g., the first element of the list would correspond to the ACDC category 1, the second element of the list to the ACDC category 2, and so on.) The network would decide which ACDC categories it wants to allow. If a particular ACDC category is completely allowed, the setting of the parameters would be such that the UE is never barred for this application. In some embodiments, if the ACDC category is not indicated (e.g., the network only broadcasts ACDC information for 3 elements), the ACDC categories 4 and 5 would be understood as to have to follow legacy ACB mechanism. For example:

```
(2) acdc-List-r13 SEQUENCE (SIZE (1..maxACDC-r13)) OF
  ACDC-Config-r13} OPTIONAL, -- Need OR
  ACDC-Config-r13 ::= SEQUENCE {acdc-Barring-r13
           AC-BarringConfig OPTIONAL, -- Need OP -- Need OR}
  AC-BarringConfig ::= SEQUENCE {ac-BarringFactor
                                    ENUMERATED {p00, p05, p10, p15, p20,
  p25, p30, p40, p50, p60, p70, p75, p80, p85, p90, p95, p100},
           ac-BarringTime
           ENUMERATED {s4, s8, s16, s32, s64, s128, s256, s512},}
```

In such embodiments, those categories not indicated in the ACDC broadcast categories are mapped to a lowest ACDC category. When ACDC is configured and activated in the UE, the UE will configure ACDC barring for the configured applications that are part of the configured categories. For applications not listed explicitly in the configured categories, the UE will assume those applications belong to the lowest ACDC category, and will select ACDC barring based on a last entry in the list of ACDC categories list. In some embodiments the application is not listed explicitly in the configured categories because the application is uncategorized, and the uncategorized application thus has the access barring information of the lowest ACDC category broadcast by the network applied to the application. In some other embodiments an application is not listed explicitly in the configured categories when an application is associated with a category not found within the listed ACDC categories. For example, an application operating on a UE may be associated with a category D, where only categories A-C are defined by the ACDC categories broadcast by the network. When network access for the application is triggered, and the ACDC category D is not found within the ACDC categories broadcast by the system, the access barring parameters would be taken from the lowest ACDC category broadcast by the network.

In some embodiments, ACB is dependent on indications for the ACDC. ACB may thus be dependent on whether the ACDC category is allowed. In some embodiments, the ACDC indication only configures a factor that the UE needs to apply on top of legacy ACB parameters already being broadcasted (e.g., a simple number might be included to be used as a division factor such as the factor N for ACDC category such as [ac-BarringFactor/N] may be used with the factor M indicated for ACDC category 2 such as [ac-BarringFactor/M].) In other embodiments, the system determines the percentage of the ACB current value that affects a certain ACDC category. In such embodiments, a 0% would indicate that the ACDC category is not barred and it is allowed, a 10% would indicate that the ACDC category should only assume 10% of the indicated ACB barring parameters, and so on. For example:

```
  (3) acdc-List-r13 SEQUENCE (SIZE (1..maxACDC-r13)) OF
  ACDC-Config-r13} OPTIONAL, -- Need OR
  ACDC-Config-r13 ::= SEQUENCE {acdc-BarringFactor-
  r13 INTEGER (0...100) OPTIONAL, -- Need OP -- Need OR}
```

where acdc-BarringFactor-r13 indicates the percentage of the ACB parameters that should be for a specific ACDC category. This might be defined to apply only to some of the parameters, such as the ac-barringFactor, or to all of them. In such embodiments, the ACB parameters used would depend on the kind of request, although in most cases this would correspond to MO-data. However, there might be cases where the application triggers other establishment groups, in which case the MO-signaling ACB parameters might be used then for other systems such as service specific access control (SSAC) systems for multimedia telephony (MMTEL) voice/video. In some embodiments, the factor could be also defined to be a value above 100 assuming that the system is to be structured to provide a higher barring factor than the one provided by the ac-BarringFactor. Alternatively, the factor could also be a multiplication factor instead.

In various embodiments, these solutions may also be combined. For example, based on the above, some embodiments may use:

```
  (5) acdc-PerPLMN-List-r13 SEQUENCE (SIZE (1..maxPLMN-r11))
  OF ACDC-ConfigPLMN-r13} OPTIONAL, -- Need OR
  ACDC-ConfigPLMN-r13 ::= SEQUENCE { acdc-List-
  r13 SEQUENCE (SIZE (1..maxACDC-r13)) OF
  ACDC-Config-r13} OPTIONAL, -- Need OR}
  ACDC-Config-r13 ::= SEQUENCE {
           acdc-Barring-r13 AC-BarringConfig
           OPTIONAL, -- Need OP}
```

where maxACDC-r13 is defined as a maximum number of ACDC categories that the operators may define through OMA configuration. In some embodiments, if a legacy "AC-BarringConfig" is used, a Barring Factor definition might be updated or a similar IE specified for ACDC might be created in order to indicate when a certain ACDC category is always allowed without having to apply the random number drawn.

For example, for an ac-BarringFactor in some embodiments, if the random number drawn by the UE is lower than this value, access is allowed. Otherwise the access is barred. The values are interpreted in the range [0,1): p00 = 0, p05 = 0.05, p10 = 0.10,..., p95 = 0.95. Values other than p00 can only be set if all bits of the corresponding ac-BarringForSpecialAC are set to 0. A UE has responsibility in such embodiments to read the updated values and use them.

Thus, while ACB and ACDC may coexist, different operations may be used to manage the relationship between ACDC and ACB in systems using ACB according to 3GPP LTE, LTE advanced, or other related communications standards. In some embodiments, when ACDC is configured (e.g. via open mobile alliance device management (OMA-DM) and activated (e.g. via the broadcast channel) in the UE, the UE will use ACDC for the configured applications that are part of the configured categories. For applications not listed in the configured categories, the UE uses ACB categories instead. In other embodiments, when ACDC is configured and activated in the UE, the UE will use ACDC for the configured applications that are part of the configured categories. For applications not listed explicitly in the configured categories, the UE will assume those applications belong to the lowest ACDC category. Embodiments described below assume the use of ACDC configured and activated using OMA-DM via the broadcast channel. Any embodiment described herein, however, may alternatively use the ACDC configured and activated in the UE with ACDC for configured applications that are part of configured categories.

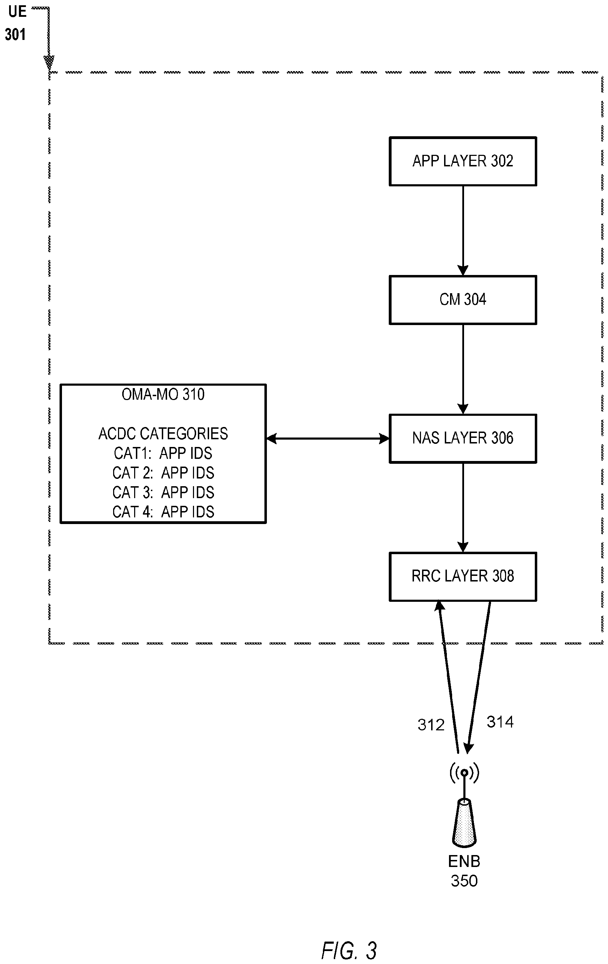

FIG. 3 is a block diagram illustrating additional details of a UE 301 in communication with an eNB 350 that may operate according to some embodiments described herein. FIG. 3 describes aspects of information flow in UE301 performing ACDC checks before accessing a network for an application layer 302 via eNB 350. In the procedure described below with respect to FIG. 3, the UE 301 and network including eNB 350 supports ACDC functionality and a mapping from an application identifier for an application in application layer 302 to an ACDC category associated with the application performed at the NAS layer 306. In other examples not covered by the scope of the claims, this mapping may be performed by a CM or RRC such as CM 304, RRC layer 308, CM 216, or RRC 204A.

As part of an initial ACDC setup operation, NAS layer 306 reads the application categories for ACDC conveyed to the UE 301 through OMA-MO 310. In FIG. 3, it is shown how the OMA-MO 310 contains information of the different applications identified by application identifiers belonging to/associated with each ACDC category, including an identifier for an application in application layer 302. In other embodiments, other kinds of information or structures for matching categories with applications may be used.

RRC 308 receives ACDC indication information on a broadcast channel from eNB 350 as part of communication 312, including the ACDC parameters. The ACDC parameters may contain a probability of access and a barring time for cases or categories where network access is not allowed. If the probability of barring is zero, then the access is granted. If probability of barring is X, then the probability of access is 1-X. Other potential ways of broadcasting this kind of information are discussed above. In some embodiments, for applications not listed in the configured categories, the UE 301 uses ACB parameters instead. In other embodiments, for applications not listed in the configured categories, the UE 301 will assume those applications belong to the lowest ACDC category.

The application layer 302 then sends request for connectivity to CM 304 or, if connectivity is already established, the application layer 302 sends an application data packet. Either of these requests will be associated with a particular application that is further associated with an ACDC category (e.g., cat1, cat2, cat3, etc.).

In some embodiments, when the UE 301 moves from connected to idle mode, it can keep the PDN connection; as a consequence, the application can also keep its IP socket. The system thus is structured to consider the case that the IP socket is already assigned from an earlier network access and the application can send data packets right away. In order to handle this case, various options are possible. In a first embodiment, CM 304 may intercept every single data packet - at least during the phase when the UE is in idle mode. This means a new attention (AT) command from RRC layer 308 to CM 304 is used to inform CM 304 about changes between an RRC idle mode and RRC connected mode. CM 304 then checks to which application the data packet belongs. For this purpose, the CM 304 would learn which local port number was assigned to which application or application identifier. In other embodiments, CM 304 may release all IP sockets each time the UE 301 moves to RRC idle mode, so that the application always needs to start with a new request for connectivity. This may use a notification from RRC layer 308 to CM 304, such as a new AT command, to indicate transition from connected to idle mode

CM 304 then sends the request or application data packet for connectivity to NAS layer 306, including the application identifier. Optionally, CM 304 can provide the ACDC category instead of the application identifier. This would operate such that the NAS layer 306 previously provides the ACDC categories list to CM 304.

The NAS layer 306 then checks if the application initiating the communication or connection from application layer 302 is in the ACDC list from OMA-MO 310 and, if so, which category it belongs to.

NAS layer 306 then forwards the request for RRC connection establishment to the RRC layer 308, including indication of the ACDC category to which the application belongs. Optionally, though not covered by the scope of the claims, NAS layer 306 could provide the application identifier instead of the ACDC category. This would operate such that the NAS layer 306 previously provides the ACDC categories list to RRC layer 308. This allows RRC layer 308 to map application identifiers into ACDC categories. If the application is not part of ACDC list, NAS layer 306 can either omit the application notification or indicate that the request comes from an application not in the ACDC list.

RRC layer 308 then performs an ACDC check. This may involve initiating a barring mechanism for applications currently barred from network access by ACDC, if applicable. Otherwise, RRC layer 308 performs ACB checks.

If ACDC category passes ACDC (e.g., no barring is initiated), then RRC layer 308 sends the RRC connection establishment request and the service request to the physical layer as part of communication 314 to eNB 350. Otherwise (e.g., barring is initiated) a reject is sent to the NAS layer 306 from RRC layer 308. This may optionally include the cause of the barring (e.g., category or ACDC parameter descriptions associated with the ACDC initiated barring of access to the network.)

As described above, in some embodiments, both ACDC and ACB may be used to manage network access in some embodiments. In certain embodiments, operation of both ACDC and ACB may be managed such that when ACDC is configured and activated in the UE, the UE will use ACDC for the configured applications that are part of ACDC categories. For applications not listed in configured ACDC categories, ACB will be used. In other embodiments, when ACDC is configured and activated in the UE, the UE will use ACDC for the configured applications that are part of the configured ACDC categories. For applications not explicitly listed in configured ACDC categories, the UE will assume those applications belong to the lowest ACDC category, and ACB may operate with any ACB parameters replaced with ACDC parameters associated with the lowest priority ACDC category. In other embodiments, other systems for managing the operation of both ACB and ACDC may be used. In various embodiments described herein, any such conflict management between ACB and ACDC may be used.

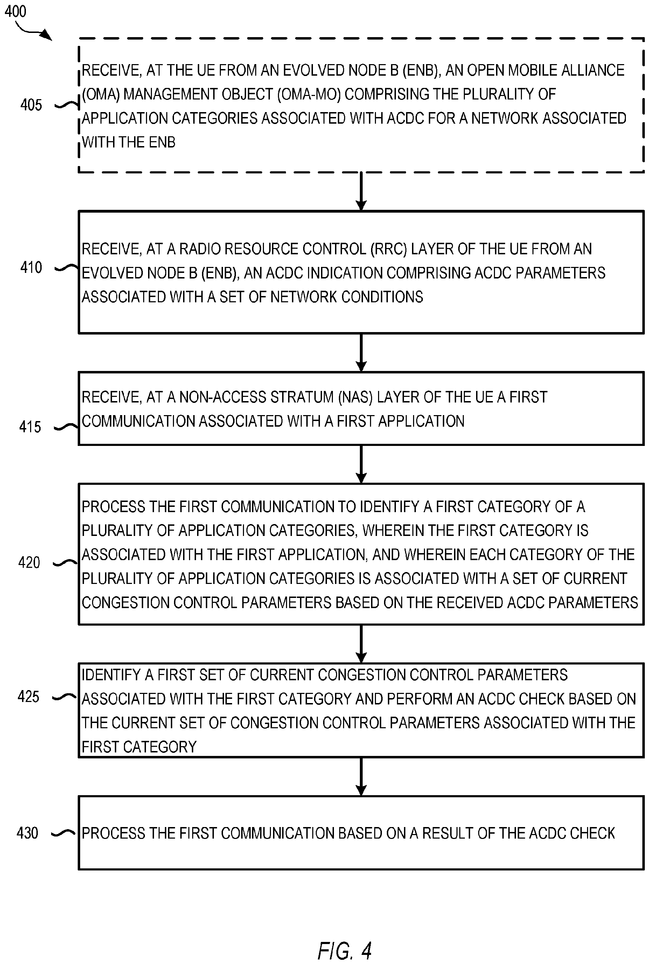

FIG. 4 then describes a method 400 for application specific congestion control for LTE, LTE advanced, or similar network data communication systems. The operations of method 400 may be implemented using any UE described herein, and will be associated with a corresponding method performed by an eNB. The UE performing method 400 may be similar to any device described herein, including UEs 101, 700, 800, 1000, or a device similar to system 900. In some embodiments, method 400 is described by instructions stored in a non-transitory computer readable medium. The instructions may be used by one or more processors accessing the medium to cause a device to perform method 400.

As illustrated, method 400 begins with operation 405 to receive, at the UE from an eNB, an OMA-MO comprising a plurality of application categories associated with ACDC for a network including an eNB and implementing ACDC. In operation 410 the UE receives, at a RRC layer of the UE from the eNB, an ACDC indication comprising ACDC parameters associated with a set of network conditions. The ACDC indication and the OMA-MO are both received at any point prior to the additional ACDC operations described below and may be updated during operation of the UE.

Then, in operation 415, a NAS layer of the UE receives a first communication associated with a first application. As described above, this communication is received from an application layer, and may either be a request for connection or may be a data packet if the connection has been previously established. In operation 420, the first communication is processed to identify a first category of a plurality of application categories, wherein the first category is associated with the first application, and wherein each category of the plurality of application categories is associated with a set of congestion control parameters based on the ACDC parameters. The categories correspond to the categories from the OMA-MO received in operation 405 above. In operation 425, a first set of current congestion control parameters is identified, and an ACDC check is performed based on the current set of congestion control parameters associated with the first category. In operation 430, the first communication is processed based on the results of the ACDC check. If congestion control associates the communication with a barring of access, then a notification that the access is barred is sent from the RRC layer to the NAS layer as part of the processing of the first communication. If access is not barred, then the processing of the first communication involves sending the communication to the physical layer for operations with the eNB as part of the application communicating with the network via the eNB.

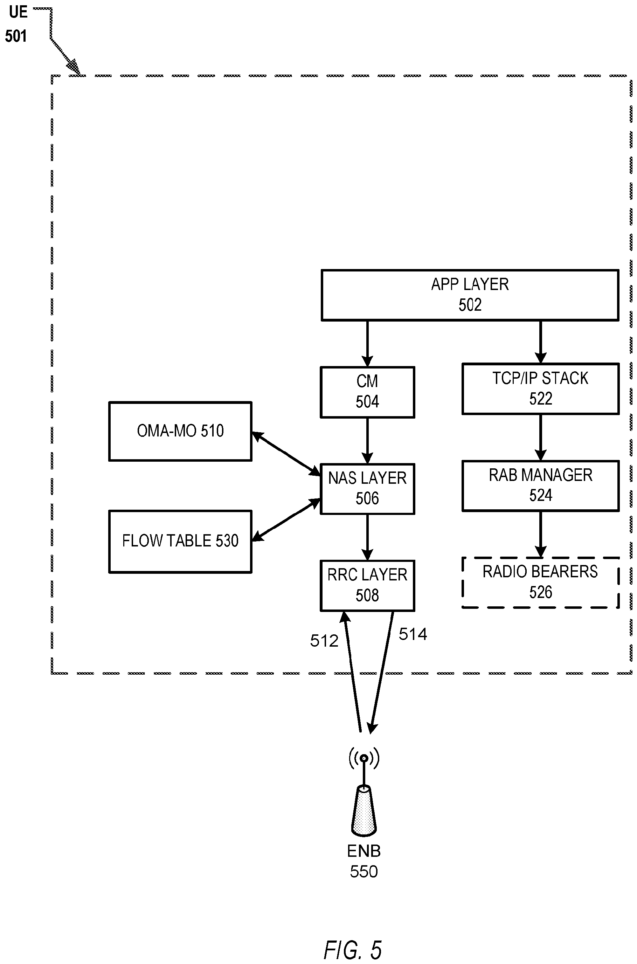

FIG. 5 is a block diagram illustrating additional details of a UE 501 in communication with an eNB 550 that may operate according to some embodiments described herein.

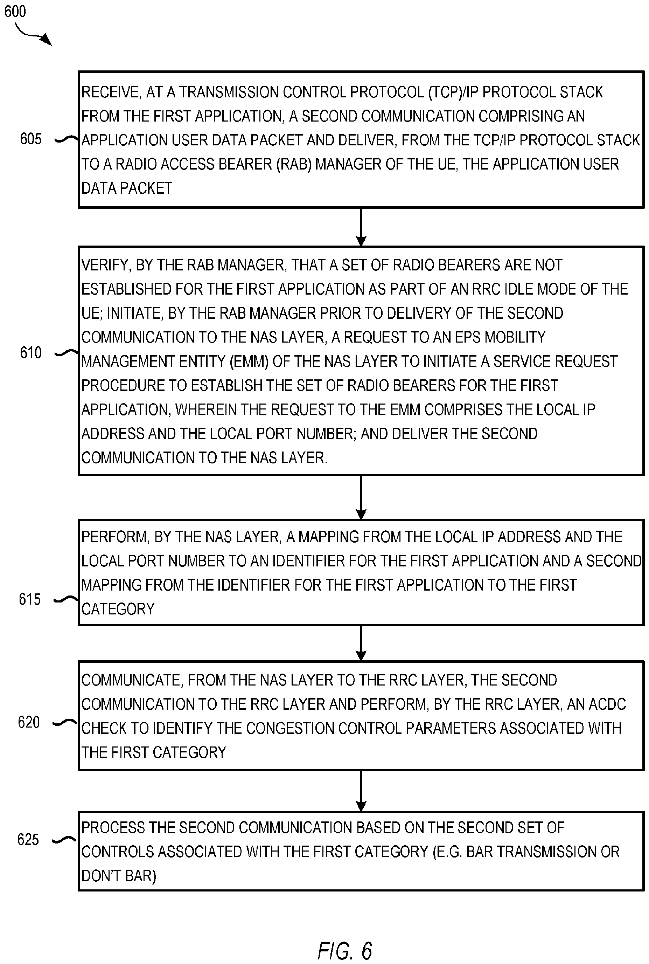

In this example of FIG. 5, the initial request for connectivity sent by the app layer is treated in a similar way as described above in FIGs. 3 and 4. FIGs. 5 and 6 describe certain embodiments where the transmission of data packets is treated differently after the initial connection is established. As such, FIG. 5 does not assume that the CM 504 is intercepting every single application data packet or that it releases all IP sockets each time the UE 501 moves to an RRC idle mode. Instead, FIG. 5 describes operations using a radio access bearer (RAB) manager 524, which is an entity in the user plane protocol stack of the cellular modem (e.g. cellular modem 204).

Thus, an initial request for connectivity may be performed by UE 501 performing a method such as method 400 or operations described above with respect to FIG. 3, with the operations performed by application layer 502, CM 504, NAS layer 506, OMA-MO 510, and RRC layer 508.

After a PDN connection has been established and the IP socket created, the CM 504 determines which local IP address and local port number is assigned to the application and informs NAS layer 506 about this. CM 504 will also inform the NAS layer 506 later when the IP socket is released. This may, for example, use a new AT command, where CM 504 provides NAS layer 506 with the correct information (e.g. application identifier, local IP address, local user datagram protocol (UDP) port number, and/or local TCP port number) when the IP socket is created and informs the NAS layer 506 later when the IP socket for the application identifier has been released.

With this information, the NAS layer 506 creates and maintains a mapping table shown as flow table 530, which provides a mapping from a local IP address and local UDP port number, or local IP address and local TCP port number, to an application identifier.

After flow table 530 is established, when the application is set to transmit an application user data packet, the application from application layer 502 delivers the packet via the IP socket to the TCP/IP protocol stack 522.

The TCP/IP protocol stack 522 delivers the packet to the RAB manager 524. The RAB manager checks whether the radio bearers 526 are established. If radio bearers 526 are not established (for example, if UE 501 is in RRC idle mode), then the RAB manager 524 requests that the NAS layer, or the evolved packet system (EPS) mobility management (EMM) entity in the NAS layer 506, initiate a service request procedure so that the radio bearers 526 are established. With this request, the RAB manager 524 provides the EMM in the NAS layer 506 with the local IP address and, if available, the local UDP port or TCP port which the RAB manager 524 extracted from the IP packet header. This IP packet header may be extracted as part of the check whether the radio bearers 526 are established.

Using flow table 530, the NAS layer 506 performs a mapping from the local IP address, and/or local UDP/TCP port to the application identifier associated with the data packet transmission. Then, by means of the OMA-MO 510, the NAS layer 506 maps from the application identifier to the ACDC category detailed in the OMA-MO 510. This provides the NAS layer 506 with the application identifier of the application attempting to send the data packet as well as the ACDC category associated with the packet. The NAS layer 506 can now proceed to perform the operations described above related to the request for RRC connection establishment to the RRC layer 508, with communications 512 and 514 similar to communications 312 and 314.

In other embodiments, the tasks may be assigned in different ways to different layers. For example, the RAB manager 524 may create and maintain the flow table 530 in some embodiments rather than the NAS layer 506. In such an embodiment, CM 504 would provide RAB manager 524 with tuples (App ID, local IP address, local UDP port number, and/or local TCP port number); and the RAB manager 524 would provide the NAS layer 506 with the application identifier instead of the descriptive data (local IP address, local UDP/TCP port) of the user data packet.

In various embodiments, the communication from an application may be processed in different ways. When multiple consecutive application requests occur, the NAS layer and RRC layer may process them differently for efficiency, in some embodiments. In some embodiments each ACDC category i may have a barring time Tbar_i (e.g., a time that the application is barred from network access) and a barring probability Pbar_i, and the priority of category j may be greater than the priority category k, if j<k. When a request arrives to the RRC layer for a category i communication and the request is barred, the RRC layer runs a timer Tbar_i. In some embodiments, this timer could also or alternatively be associated with ACB barring. In such an embodiment, the NAS layer is notified of ACDC/ACB barring associated with timer Tbar_i.

When a request for a second category j is sent from a CM to the NAS layer, then in some embodiments, if j >= i, the communication is automatically barred. This may happen in the NAS layer to block the RRC connection request to the RRC layer. In other embodiments, this may occur in the RRC layer, which sends a rejection to the NAS layer.

In some embodiments, the RRC layer may operate as follows. If j < i, then the RRC layer will check barring conditions based on Pbar_j. If the ACDC category passes the barring test, Tbar_i is stopped and the RRC layer initiates an RRC connection request procedure. If the ACDC category does not pass the barring test, the RRC layer rejects the request and a number of options may occur. In one embodiment, the RRC layer runs one timer per ACDC category. In another embodiment, the RRC layer stops Tbar_i and runs a new timer = min(Tbar_j and remaining lifetime of Tbar_i). In another embodiment, the RRC layer stops Tbar_i and runs Tbar_j. In another embodiment, the RRC layer continues running Tbar_i.

In embodiments where the NAS takes a decision that a previous access barred indication could be ignored (e.g. where a new ACDC category has a higher priority) and therefore, RRC only stops the running bar time and checks whether access is barred or not for the new higher priority ACDC category. If access is barred under the new higher priority ACDC category, a new bar time is initiated. After the new bar time is initiated, upper layers are informed about the failure to establish an RRC connection, and that access barring is applicable due to ACDC.

FIG. 6 describes a method for application specific congestion control, according to some embodiments described herein. Method 600 may be performed following method 400 or a similar method for establishing an initial connection in response to an application requesting network access. In various embodiments, the operations of method 400 and 600 may be repeated and combined in a variety of different ways as a UE enters and leaves an RRC idle mode and releases and reestablishes connections. Similarly, various embodiments may omit certain operations in accordance with the present innovations (for example, if a RAB manager determines that radio bearers are established, then operation 610 may be replaced with an alternate operation using the established radio bearers).

Method 600 begins with operation 605 following an initial communication and set of operations establishing a connection for an application. Operation 605 includes a TCP/IP protocol stack receiving, from a first application, a second communication comprising an application user data packet and delivering, from the TCP/IP protocol stack to a RAB manager of the UE, the application user data packet.

In operation 610, the RAB manager verifies that a set of radio bearers are not established for the first application as part of an RRC idle mode of the UE and initiates a request to an EMM of the NAS layer to initiate a service request procedure to establish the set of radio bearers for the first application, wherein the request to the EMM comprises the local IP address and the local port number.

The NAS layer then performs a mapping from the local IP address and the local port number to an identifier for the first application and second mapping from the identifier for the first application to the first category as part of operation 615. This information is then communicated from the NAS layer to the RRC layer in operation 620. It is used by the RRC layer to identify the current congestion control parameters associated with the first category and to perform an ACDC check in operation 620 to determine whether access to the network is allowed or barred.

Based on the result of this ACDC check, the service request procedure is processed. If congestion control associates the service request procedure with a barring of access, then a notification that the access is barred is sent from the RRC layer to the NAS layer as part of the processing of the service request procedure. If access is not barred, then the processing of the service request procedure involves establishment of the radio bearers by the eNB and sending the second communication via the radio bearers to the physical layer for operations with the eNB as part of the application communicating with the network via the eNB.

### EXAMPLES

In various embodiments, methods, apparatus, non-transitory media, computer program products, or other implementations may be presented as example embodiments, in accordance with the descriptions provided above. Certain embodiments may include UE such as phones, tablets, mobile computers, or other such devices. Some embodiments may be integrated circuit components of such devices, such as circuits implementing processing on an integrated circuitry. In some embodiments, functionality may be on a single chip or multiple chips in an apparatus. Some such embodiments may further include transmit and receive circuitry on integrated or separate circuits, with antennas that are similarly integrated or separate structures of a device. Any such components or circuit elements may similarly apply to corresponding evolved node B embodiments described herein.

In various embodiments, any additional elements associated with the various embodiments described herein may be combined with elements in other embodiments in ways apparent from the detailed description provided herein.

### EXAMPLE SYSTEMS AND DEVICES

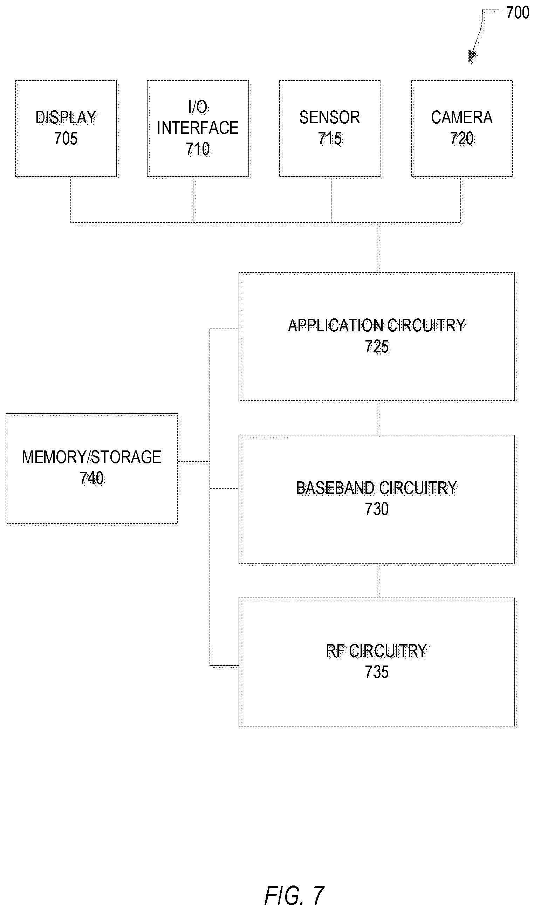

FIG. 7 illustrates aspects of a computing machine, according to some example embodiments. Embodiments described herein may be implemented into a system 700 using any suitably configured hardware and/or software. FIG. 7 illustrates, for some embodiments, an example system 700 comprising RF circuitry 735, baseband circuitry 730, application circuitry 725, memory/storage 740, a display 705, a camera 720, a sensor 715, and an input/output (I/O) interface 710, coupled with each other at least as shown.

The application circuitry 725 may include circuitry such as, but not limited to, one or more single-core or multi-core processors. The processor(s) may include any combination of general-purpose processors and dedicated processors (e.g., graphics processors, application processors, etc.). The processors may be coupled with the memory/storage 740 and configured to execute instructions stored in the memory/storage 740 to enable various applications and/or operating systems running on the system 700.

The baseband circuitry 730 may include circuitry such as, but not limited to, one or more single-core or multi-core processors. The processor(s) may include a baseband processor. The baseband circuitry 730 may handle various radio control functions that enable communication with one or more radio networks via the RF circuitry 735. The radio control functions may include, but are not limited to, signal modulation, encoding, decoding, radio frequency shifting, and the like. In some embodiments, the baseband circuitry 730 may provide for communication compatible with one or more radio technologies. For example, in some embodiments, the baseband circuitry 730 may support communication with an evolved universal terrestrial radio access network (EUTRAN), other wireless metropolitan area networks (WMANs), a WLAN, or a wireless personal area network (WPAN). Embodiments in which the baseband circuitry 730 is configured to support radio communications of more than one wireless protocol may be referred to as multi-mode baseband circuitry.

In various embodiments, the baseband circuitry 730 may include circuitry to operate with signals that are not strictly considered as being in a baseband frequency. For example, in some embodiments, the baseband circuitry 730 may include circuitry to operate with signals having an intermediate frequency, which is between a baseband frequency and a radio frequency.

The RF circuitry 735 may enable communication with wireless networks using modulated electromagnetic radiation through a non-solid medium. In various embodiments, the RF circuitry 735 may include switches, filters, amplifiers, and the like to facilitate the communication with the wireless network.

In various embodiments, the RF circuitry 735 may include circuitry to operate with signals that are not strictly considered as being in a radio frequency. For example, in some embodiments, the RF circuitry 735 may include circuitry to operate with signals having an intermediate frequency, which is between a baseband frequency and a radio frequency.

In various embodiments, the transmitter circuitry or receiver circuitry discussed above with respect to the UE or eNB may be embodied in whole or in part in one or more of the RF circuitry 735, the baseband circuitry 730, and/or the application circuitry 725.

In some embodiments, some or all of the constituent components of a baseband processor may be used to implement aspects of any embodiment described herein. Such embodiments may be implemented by the baseband circuitry 730, the application circuitry 725, and/or the memory/storage 740 may be implemented together on a system on a chip (SOC).

The memory/storage 740 may be used to load and store data and/or instructions, for example, for the system 700. The memory/storage 740 for one embodiment may include any combination of suitable volatile memory (e.g., dynamic random access memory (DRAM)) and/or non-volatile memory (e.g., flash memory).

In various embodiments, the I/O interface 710 may include one or more user interfaces designed to enable user interaction with the system 700 and/or peripheral component interfaces designed to enable peripheral component interaction with the system 700. User interfaces may include, but are not limited to, a physical keyboard or keypad, a touchpad, a speaker, a microphone, and so forth. Peripheral component interfaces may include, but are not limited to, a non-volatile memory port, a universal serial bus (USB) port, an audio jack, and a power supply interface.

In various embodiments, the sensor 715 may include one or more sensing devices to determine environmental conditions and/or location information related to the system 700. In some embodiments, the sensors 715 may include, but are not limited to, a gyro sensor, an accelerometer, a proximity sensor, an ambient light sensor, and a positioning unit. The positioning unit may also be part of, or interact with, the baseband circuitry 730 and/or RF circuitry 735 to communicate with components of a positioning network (e.g., a global positioning system (GPS) satellite). In various embodiments, the display 705 may include a display (e.g., a liquid crystal display, a touch screen display, etc.).

In various embodiments, the system 700 may be a mobile computing device such as, but not limited to, a laptop computing device, a tablet computing device, a netbook, an ultrabook, a smartphone, and the like. In various embodiments, the system 700 may have more or fewer components, and/or different architectures.

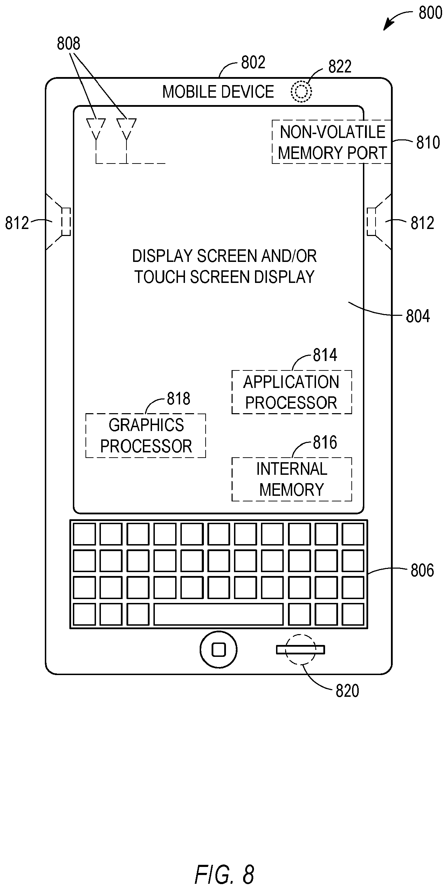

FIG. 8 shows an example UE, illustrated as a UE 800. The UE 800 may be an implementation of the UE 101, the eNB 150, or any device described herein. The UE 800 can include one or more antennas 808 configured to communicate with a transmission station, such as a base station (BS), an eNB, or another type of wireless wide area network (WWAN) access point. The UE 800 can be configured to communicate using at least one wireless communication standard including 3GPP LTE, WiMAX, High Speed Packet Access (HSPA), Bluetooth, and WiFi. The UE 800 can communicate using separate antennas for each wireless communication standard or shared antennas for multiple wireless communication standards. The UE 800 can communicate in a WLAN, a WPAN, and/or a WWAN.

FIG. 8 also shows a microphone 820 and one or more speakers 812 that can be used for audio input and output to and from the UE 800. A display screen 804 can be a liquid crystal display (LCD) screen, or another type of display screen such as an organic light emitting diode (OLED) display. The display screen 804 can be configured as a touch screen. The touch screen can use capacitive, resistive, or another type of touch screen technology. An application processor 814 and a graphics processor 818 can be coupled to an internal memory 816 to provide processing and display capabilities. A non-volatile memory port 810 can also be used to provide data I/O options to a user. The non-volatile memory port 810 can also be used to expand the memory capabilities of the UE 800. A keyboard 806 can be integrated with the UE 800 or wirelessly connected to the UE 800 to provide additional user input. A virtual keyboard can also be provided using the touch screen. A camera 822 located on the front (display screen) side or the rear side of the UE 800 can also be integrated into the housing 802 of the UE 800.

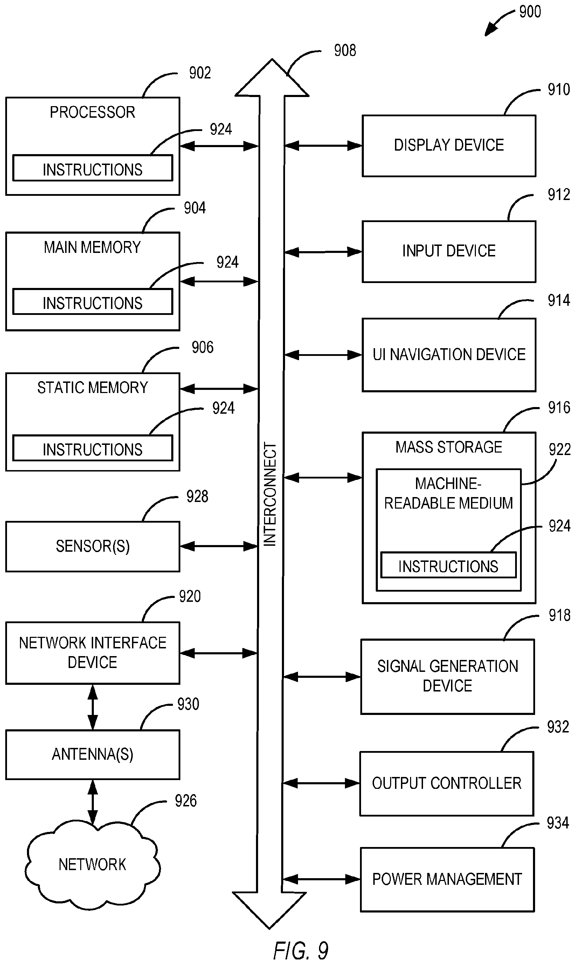

FIG. 9 is a block diagram illustrating an example computer system machine 900 upon which any one or more of the methodologies herein discussed can be run, and which may be used to implement the eNB 150, the UE 101, or any other device described herein. In various alternative embodiments, the machine operates as a standalone device or can be connected (e.g., networked) to other machines. In a networked deployment, the machine can operate in the capacity of either a server or a client machine in server-client network environments, or it can act as a peer machine in peer-to-peer (or distributed) network environments. The machine can be a personal computer (PC) that may or may not be portable (e.g., a notebook or a netbook), a tablet, a set-top box (STB), a gaming console, a Personal Digital Assistant (PDA), a mobile telephone or smartphone, a web appliance, a network router, switch, or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system machine 900 includes a processor 902 (e.g., a central processing unit (CPU), a graphics processing unit (GPU), or both), a main memory 904, and a static memory 906, which communicate with each other via an interconnect 908 (e.g., a link, a bus, etc.). The computer system machine 900 can further include a video display unit 910, an alphanumeric input device 912 (e.g., a keyboard), and a user interface (UI) navigation device 914 (e.g., a mouse). In one embodiment, the video display unit 910, input device 912, and UI navigation device 914 are a touch screen display. The computer system machine 900 can additionally include a mass storage device 916 (e.g., a drive unit), a signal generation device 918 (e.g., a speaker), an output controller 932, a power management controller 934, a network interface device 920 (which can include or operably communicate with one or more antennas 930, transceivers, or other wireless communications hardware), and one or more sensors 928, such as a GPS sensor, compass, location sensor, accelerometer, or other sensor.

The storage device 916 includes a machine-readable medium 922 on which is stored one or more sets of data structures and instructions 924 (e.g., software) embodying or utilized by any one or more of the methodologies or functions described herein. The instructions 924 can also reside, completely or at least partially, within the main memory 904, static memory 906, and/or processor 902 during execution thereof by the computer system machine 900, with the main memory 904, the static memory 906, and the processor 902 also constituting machine-readable media.

While the machine-readable medium 922 is illustrated in an example embodiment to be a single medium, the term "machine-readable medium" can include a single medium or multiple media (e.g., a centralized or distributed database, and/or associated caches and servers) that store the one or more instructions 924. The term "machine-readable medium" shall also be taken to include any tangible medium that is capable of storing, encoding, or carrying instructions for execution by the machine and that cause the machine to perform any one or more of the methodologies of the present disclosure, or that is capable of storing, encoding, or carrying data structures utilized by or associated with such instructions.

The instructions 924 can further be transmitted or received over a communications network 926 using a transmission medium via the network interface device 920 utilizing any one of a number of well-known transfer protocols (e.g., hypertext transfer protocol (HTTP)). The term "transmission medium" shall be taken to include any medium that is capable of storing, encoding, or carrying instructions for execution by the machine, and includes digital or analog communications signals or other intangible media to facilitate communication of such software.

Various techniques, or certain aspects or portions thereof, may take the form of program code (i.e., instructions) embodied in tangible media, such as floppy diskettes, CD-ROMs, hard drives, non-transitory computer readable storage media, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a RAM, Erasable Programmable Read-Only Memory (EPROM), flash drive, optical drive, magnetic hard drive, or other medium for storing electronic data. The base station and mobile station may also include a transceiver module, a counter module, a processing module, and/or a clock module or timer module. One or more programs that may implement or utilize the various techniques described herein may use API, reusable controls and the like. Such programs may be implemented in a high level procedural or object-oriented programming language to communicate with a computer system. However, the program(s) may be implemented in assembly or machine language, if desired. In any case, the language may be a compiled or interpreted language, and combined with hardware implementations.

Various embodiments may use 3GPP LTE/LTE-A, Institute of Electrical and Electronic Engineers (IEEE) 902.11, and Bluetooth communication standards. Various alternative embodiments may use a variety of other WWAN, WLAN, and WPAN protocols and standards in connection with the techniques described herein. These standards include, but are not limited to, other standards from 3GPP (e.g., HSPA+, UMTS), IEEE 902.16 (e.g., 902.16p), or Bluetooth (e.g., Bluetooth 8.0, or like standards defined by the Bluetooth Special Interest Group) standards families. Other applicable network configurations can be included within the scope of the presently described communication networks. It will be understood that communications on such communication networks can be facilitated using any number of PANs, LANs, and WANs, using any combination of wired or wireless transmission mediums.

FIG. 10 illustrates, for one embodiment, example components of a UE device 1000, in accordance with some embodiments. In some embodiments, the UE device 1000 may include application circuitry 1002, baseband circuitry 1004, RF circuitry 1006, FEM circuitry 1008, and one or more antennas 1010, coupled together at least as shown. In some embodiments, the UE device 1000 may include additional elements such as, for example, memory/storage, display, camera, sensor, and/or I/O interface.

The application circuitry 1002 may include one or more application processors. For example, the application circuitry 1002 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 1004 may include circuitry such as, but not limited to, one or more single-core or multi-core processors. The baseband circuitry 1004 may include one or more baseband processors and/or control logic to process baseband signals received from a receive signal path of the RF circuitry 1006 and to generate baseband signals for a transmit signal path of the RF circuitry 1006. Baseband processing circuity 1004 may interface with the application circuitry 1002 for generation and processing of the baseband signals and for controlling operations of the RF circuitry 1006. For example, in some examples, the baseband circuitry 1004 may include a second generation (2G) baseband processor 1004a, third generation (3G) baseband processor 1004b, fourth generation (4G) baseband processor 1004c, and/or other baseband processor(s) 1004d for other existing generations, generations in development or to be developed in the future (e.g., fifth generation (5G), 6G, etc.). The baseband circuitry 1004 (e.g., one or more of baseband processors 1004a-d) may handle various radio control functions that enable communication with one or more radio networks via the RF circuitry 1006. The radio control functions may include, but are not limited to, signal modulation/demodulation, encoding/decoding, radio frequency shifting, and the like. In some examples, modulation/demodulation circuitry of the baseband circuitry 1004 may include Fast-Fourier Transform (FFT), precoding, and/or constellation mapping/demapping functionality. In some examples, encoding/decoding circuitry of the baseband circuitry 1004 may include convolution, tail-biting convolution, turbo, Viterbi, and/or Low Density Parity Check (LDPC) encoder/decoder functionality, examples of modulation/demodulation and encoder/decoder functionality are not limited to these examples and may include other suitable functionality in other examples.

In some examples, the baseband circuitry 1004 may include elements of a protocol stack such as, for example, elements of an FUTRAN protocol including, for example, physical (PHY), media access control (MAC), radio link control (RLC), packet data convergence protocol (PDCP), and/or RRC elements. A central processing unit (CPU) 1004e of the baseband circuitry 1004 may be configured to run elements of the protocol stack for signaling of the PHY, MAC, RLC, PDCP and/or RRC layers. In some examples, the baseband circuitry may include one or more audio digital signal processor(s) (DSP) 1004f. The audio DSP(s) 1004f may be include elements for compression/decompression and echo cancellation and may include other suitable processing elements in other examples. Components of the baseband circuitry may be suitably combined in a single chip, a single chipset, or disposed on a same circuit board in some examples. In some examples, some or all of the constituent components of the baseband circuitry 1004 and the application circuitry 1002 may be implemented together such as, for example, on a SOC.

In some examples, the baseband circuity 1004 may provide for communication compatible with one or more radio technologies. For example, in some examples, the baseband circuitry 1004 may support communication with an evolved universal terrestrial radio access network (FUTRAN) and/or other WMAN, WLAN, or WPAN. Examples in which the baseband circuitry 1004 is configured to support radio communications of more than one wireless protocol may be referred to as multi-mode baseband circuitry.

RF circuitry 1006 may enable communication with wireless networks using modulated electromagnetic radiation through a non-solid medium. In various examples, the RF circuitry 1006 may include switches, filters, amplifiers, and the like to facilitate the communication with the wireless network. RF circuity 1006 may include a receive signal path which may include circuitry to down-convert RF signals received from the FEM circuitry 1008 and provide baseband signals to the baseband circuitry 1004. RF circuitry 1006 may also include a transmit signal path which may include circuitry to up- convert baseband signals provided by the baseband circuitry 1004 and provide RF output signals to the FEM circuitry 1008 for transmission.

In some examples, the RF circuitry 1006 may include a receive signal path and a transmit signal path. The receive signal path of the RF circuitry 1006 may include mixer circuitry 1006a, amplifier circuitry 1006b, and filter circuitry 1006c. The transmit signal path of the RF circuitry 1006 may include filter circuitry 1006c and mixer circuitry 1006a. RF circuitry 1006 may also include synthesizer circuitry 1006d for synthesizing a frequency for use by the mixer circuitry 1006a of the receive signal path and the transmit signal path. In some examples, the mixer circuitry 1006a of the receive signal path may be configured to down-convert RF signals received from the FEM circuitry 1008 based on the synthesized frequency provided by synthesizer circuitry 1006d.

The amplifier circuitry 1006b may be configured to amplify the down-converted signals, and the filter circuitry 1006c may be a low-pass filter (EPF) or bandpass filter (BPF) configured to remove unwanted signals from the down- converted signals to generate output baseband signals. Output baseband signals may be provided to the baseband circuitry 1004 for further processing. In some examples, the output baseband signals may be zero-frequency baseband signals, although this is not a requirement. In some examples, mixer circuitry 1006a of the receive signal path may comprise passive mixers, although the scope of the examples is not limited in this respect.

In some examples, the mixer circuitry 1006a of the transmit signal path may be configured to up-convert input baseband signals based on the synthesized frequency provided by the synthesizer circuitry 1006d to generate RF output signals for the FEM circuitry 1008. The baseband signals may be provided by the baseband circuitry 1004 and may be filtered by filter circuitry 1006c. The filter circuitry 1006c may include a EPF, although the scope of the examples is not limited in this respect.

In some examples, the mixer circuitry 1006a of the receive signal path and the mixer circuitry 1006a of the transmit signal path may include two or more mixers and may be arranged for quadrature down conversion and/or up conversion, respectively. In some examples, the mixer circuitry 1006a of the receive signal path and the mixer circuitry 1006a of the transmit signal path may include two or more mixers and may be arranged for image rejection (e.g., Hartley image rejection). In some examples, the mixer circuitry 1006a of the receive signal path and the mixer circuitry 1006a may be arranged for direct down conversion and/or direct up conversion, respectively. In some examples, the mixer circuitry 1006a of the receive signal path and the mixer circuitry 1006a of the transmit signal path may be configured for super-heterodyne operation.

In some examples, the output baseband signals and the input baseband signals may be analog baseband signals, although the scope of the embodiments is not limited in this respect. In some alternate examples, the output baseband signals and the input baseband signals may be digital baseband signals. In these alternate examples, the RF circuitry 1006 may include analog-to-digital converter (ADC) and digital-to-analog converter (DAC) circuitry, and the baseband circuitry 1004 may include a digital baseband interface to communicate with the RF circuity 1006.

In some dual-mode examples, separate circuitry including one or more integrated circuits may be provided for processing signals for each spectrum, although the scope of the embodiments is not limited in this respect.

In some examples, the synthesizer circuitry 1006d may be a fractional-N synthesizer or a fractional N/N+1 synthesizer, although the scope of the embodiments is not limited in this respect as other types of frequency synthesizers may be suitable. For example, synthesizer circuitry 1006d may be a delta-sigma synthesizer, a frequency multiplier, or a synthesizer comprising a phase-locked loop with a frequency divider.

The synthesizer circuitry 1006d may be configured to synthesize an output frequency for use by the mixer circuitry 1006a of the RF circuitry 1006 based on a frequency input and a divider control input. In some examples, the synthesizer circuitry 1006d may be a fractional N/N+1 synthesizer.

In some examples, frequency input may be provided by a voltage controlled oscillator (VCO), although that is not a requirement. Divider control input may be provided by either the baseband circuitry 1004 or the applications processor 1002 depending on the desired output frequency. In some examples, a divider control input (e.g., N) may be determined from a lookup table based on a channel indicated by the applications processor 1002.

Synthesizer circuitry 1006d of the RF circuitry 1006 may include a divider, a delay-locked loop (DLL), a multiplexer and a phase accumulator. In some examples, the divider may be a dual modulus divider (DMD) and the phase accumulator may be a digital phase accumulator (DPA). In some examples, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump, and a D-type flip-flop. In these examples, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some examples, synthesizer circuitry 1006d may be configured to generate a carrier frequency as the output frequency, while in other examples, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some examples, the output frequency may be a LO frequency (fLO). In some examples, the RF circuitry 1006 may include a polar converter.

FEM circuitry 1008 may include a receive signal path, which may include circuitry configured to operate on RF signals received from one or more antennas 1010, amplify the received signals, and provide the amplified versions of the received signals to the RF circuitry 1006 for further processing. FEM circuitry 1008 may also include a transmit signal path, which may include circuitry configured to amplify signals for transmission provided by the RF circuitry 1006 for transmission by one or more of the one or more antennas 1010.

In some examples, the FEM circuitry 1008 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 1006). The transmit signal path of the FEM circuitry 1008 may include a power amplifier (PA) to amplify input RF signals (e.g., provided by RF circuitry 1006), and one or more filters to generate RF signals for subsequent transmission (e.g., by one or more of the one or more antennas 1010).

In some examples, the UE 1000 comprises a plurality of power saving mechanisms. If the UE 1000 is in an RRC_Connected state, where it is still connected to the eNB because it expects to receive traffic shortly, then it may enter a state known as Discontinuous Reception Mode (DRX) after a period of inactivity. During this state, the device may power down for brief intervals of time and thus save power.

If there is no data traffic activity for an extended period of time, then the UE 1000 may transition off to an RRC_Idle state, where it disconnects from the network and does not perform operations such as channel quality feedback, handover, and the like. The UE 1000 goes into a very low power state and it performs paging where it periodically wakes up to listen to the network and then powers down again. The device cannot receive data in this state; in order to receive data, the device transitions back to an RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

The examples described above can be implemented in one or a combination of hardware, firmware, and software. Various methods or techniques, or certain aspects or portions thereof, can take the form of program code (i.e., instructions) embodied in tangible media, such as flash memory, hard drives, portable storage devices, read-only memory (ROM), RAM, semiconductor memory devices (e.g., EPROM, Electrically Erasable Programmable Read-Only Memory (EEPROM)), magnetic disk storage media, optical storage media, and any other machine-readable storage medium or storage device wherein, when the program code is loaded into and executed by a machine, such as a computer or networking device, the machine becomes an apparatus for practicing the various techniques.

It should be understood that the functional units or capabilities described in this specification may have been referred to or labeled as components or modules in order to more particularly emphasize their implementation independence. For example, a component or module can be implemented as a hardware circuit comprising custom very-large-scale integration (VLSI) circuits or gate arrays, off-the-shelf semiconductors such as logic chips, transistors, or other discrete components. A component or module can also be implemented in programmable hardware devices such as field programmable gate arrays, programmable array logic, programmable logic devices, or the like. Components or modules can also be implemented in software for execution by various types of processors. An identified component or module of executable code can, for instance, comprise one or more physical or logical blocks of computer instructions, which can, for instance, be organized as an object, procedure, or function. Nevertheless, the executables of an identified component or module need not be physically located together, but can comprise disparate instructions stored in different locations which, when joined logically together, comprise the component or module and achieve the stated purpose for the component or module.

Indeed, a component or module of executable code can be a single instruction, or many instructions, and can even be distributed over several different code segments, among different programs, and across several memory devices. Similarly, operational data can be identified and illustrated herein within components or modules, and can be embodied in any suitable form and organized within any suitable type of data structure. The operational data can be collected as a single data set, or can be distributed over different locations including over different storage devices, and can exist, at least partially, merely as electronic signals on a system or network. The components or modules can be passive or active, including agents operable to perform desired functions.

## Claims

1. A non-transitory computer readable medium comprising instructions that, when executed by one or more processors of a user equipment, UE (101, 201, 301, 501, 800), for application specific congestion control for data communication, ACDC, the instructions to configure the UE (101, 201, 301, 501, 800) to:
receive, at a radio resource control, RRC, layer (508) of the UE (101, 201, 301, 501, 800) from an evolved node B, eNB (150, 250, 350, 550), an ACDC indication of ACDC parameters for one or more ACDC categories;
receive, at a non-access stratum, NAS, layer (506) of the UE (101, 201, 301, 501, 800) a first communication associated with a first application;
determine, at the NAS layer, a category for the first application of a plurality of ACDC categories based on an open mobile alliance, OMA, management object, OMA-MO, comprising a plurality of application categories associated with ACDC for a wireless communication network, wherein the OMA-MO includes information for a matching of respective application IDs to the plurality of ACDC categories;
indicate, by the NAS layer to the RRC layer, the category for an access request;
identify, at the RRC layer, a set of current congestion control parameters associated with the category from the received ACDC parameters for one or more ACDC categories;
perform, at the RRC layer, an ACDC check based on the current set of congestion control parameters associated with the category; and
process the first communication based on a result of the ACDC check.

2. The non-transitory computer readable medium of claim 1 wherein the instructions further configure the UE (101, 201, 301, 501, 800) to:
receive, at the UE (101, 201, 301, 501, 800) from an evolved node B, eNB (150, 250, 350, 550), the open mobile alliance, OMA, management object, OMA-MO.

3. The non-transitory computer readable medium of claims 1 or 2 wherein the instructions further configure the UE (101, 201, 301, 501, 800) to:
receive, at a connectivity manager, CM (504), of the UE (101, 201, 301, 501, 800) from an application layer of the UE (101, 201, 301, 501, 800), a first communication associated with a first application;
wherein the first communication is received at the non-access stratum, NAS, layer (506) of the UE (101, 201, 301, 501, 800) via the CM (504) from the first application,
wherein receipt of the ACDC indication is processed by the radio resource control, RRC, layer of the UE (101, 201, 301, 501, 800).

4. The non-transitory computer readable medium of claim 3 wherein the instructions further configure the UE (101, 201, 301, 501, 800) to process the first communication to identify the category by:
sending the first communication from the CM (504) to the NAS layer (506) with an application identifier for the first application;
checking, at the NAS layer (506), the application identifier with an ACDC list from the OMA-MO to identify the category as associated with the first application;
sending the first communication from the NAS layer (506) to the RRC layer (508) with an indication identifying the category,
wherein the instructions configure the UE (101, 201, 301, 501, 800) to perform the ACDC check by:
receiving the first communication at the RRC layer (508) from the NAS layer (506) with the indication identifying the category; and
performing the ACDC check at the RRC layer (508) to identify any applicable barring mechanism.

5. The non-transitory computer readable medium of claim 4 wherein the instructions configure the UE (101, 201, 301, 501, 800) to process the first communication by:
based on a determination at the RRC layer (508) that the first application is barred from network access by the current congestion control parameters associated with the category, communicating a rejection from the RRC layer (508) to the NAS layer (506).

6. The non-transitory computer readable medium of claim 5 wherein the rejection comprises an ACDC category barred rejection indication, wherein the instructions configure the UE (101, 201, 301, 501, 800) to process the first communication by:
based on a determination at the RRC layer (508) that the first application is allowed network access by the current congestion control parameters associated with the category, forwarding the first communication to a physical layer of the UE (101, 201, 301, 501, 800).

7. The non-transitory computer readable medium of claim 3-6 wherein the first communication is received at the connectivity manager, CM (504), as part of an interception, by the CM (504), of each application data packet for each application operating on the UE (101, 201, 301, 501, 800) to be transmitted using the network, wherein the CM (504) releases all internet protocol sockets each time the UE (101, 201,301, 501, 800) transitions to an RRC idle state.

8. The non-transitory computer readable medium of claims 1-7 wherein the instructions further configure the UE (101, 201, 301, 501, 800) to:
communicate, from the application layer of the UE (101, 201, 301, 501, 800), a second communication associated with a second application;
process the second communication to determine that the second application is not associated with any category of the plurality of application categories; and
based on the determination that the second application is not associated with any of the plurality of application categories, process the second
communication using a set of access class barring, ACB, protocols separate from the different sets of current congestion control parameters.

9. The non-transitory computer readable medium of claims 1-8 wherein the instructions further configure the UE (101, 201, 301, 501, 800) to:
communicate, from the application layer of the UE (101, 201, 301, 501, 800) to the connectivity manager of the UE (101, 201, 301, 501, 800), a second communication associated with a second application;
process the second communication to determine that the second application is not associated with any category of the plurality of application categories; and
based on the determination that the second application is not associated with any of the plurality of application categories, process the second communication using a lowest priority ACDC category of the plurality of application categories.

10. The non-transitory computer readable medium of claims 1-9 wherein the first communication comprises an application data packet and the instructions further configure the UE (101, 201, 301, 501, 800) to:
establish a packet data network, PDN, connection and generate an internet protocol, IP, socket for the first application in response to the request for connectivity;
determine, a local IP address and a local port number assigned to the first application;
communicate, to the NAS layer (506), the local IP address and the local port number for the first application; and
generate, by the NAS layer (506), a mapping table to map the local IP address and the local port number to the first application.

11. The non-transitory computer readable medium of claim 10 wherein the instructions further configure the UE (101, 201, 301, 501, 800) to:
receive, at a transmission control protocol, TCP/IP protocol stack or user datagram protocol, UDP/IP protocol stack from the first application, a second communication comprising an application user data packet;
deliver, from the TCP/IP protocol stack or UDP/IP protocol stack to a radio access bearer, RAB, manager of the UE (101, 201, 301, 501, 800), the application user data packet;
deliver, from the RAB manager to the NAS layer (506), the local IP address and the local port number associated with the second communication;
perform, by the NAS layer (506), a mapping from the local IP address and the local port number to an identifier for the first application;
perform, by the NAS layer (506), a second mapping from the identifier for the first application to the category;
communicate, from the NAS layer (506) to the RRC layer (508), a service request with an indication identifying the first category to the RRC layer (508);
identify, by the RRC layer (508), a set of current congestion control parameters associated with the category;
perform, by the RRC layer (508), an ACDC check based on the current set of congestion control parameters associated with the category; and
process, by the RRC layer (508), the service request based on the result of the ACDC check.

12. The non-transitory computer readable medium of claim 10 wherein the instructions further configure the UE (101, 201, 301, 501, 800) to:
verify, by the RAB manager, that a set of radio bearers are not established for the first application as part of an RRC idle mode of the UE (101, 201, 301,501, 800);
initiate, by the RAB manager prior to delivery of the second communication to the NAS layer (506), a request to an EPS mobility management entity, EMM, of the NAS layer (506) to initiate a service request procedure to establish the set of radio bearers for the first application, wherein the request to the EMM comprises the local IP address and the local port number.

13. An apparatus of a user equipment, UE (101, 201, 301, 501, 800), comprising:
radio frequency circuitry and
baseband circuitry coupled to the radio frequency circuitry, wherein the baseband circuitry is configured to:
receive, at a radio resource control, RRC, layer (508) of the UE (101, 201, 301, 501, 800) from an evolved node B, eNB, (150, 250, 350, 550), an application specific congestion control for data communication, ACDC, indication of ACDC parameters for one or more ACDC categories;
receive, at a non-access stratum, NAS, layer (506) of the UE (101, 201, 301, 501, 800) a first communication associated with a first application;
determine, at the NAS layer, a category for the first application of a plurality of ACDC categories based on an open mobile alliance, OMA, management object, OMA-MO, comprising a plurality of application categories associated with ACDC for a wireless communication network, wherein the OMA-MO includes information for a matching of respective application IDs to the plurality of ACDC categories;
indicate, by the NAS layer to RRC layer, the category for an access request;
identify, at the RRC layer, a set of current congestion control parameters associated with the category from the received ACDC parameters for one or more AC categories; and process the first communication based on a result of the ACDC check.

14. The apparatus of claim 13 further comprising:
application circuity coupled to the baseband circuitry, the application circuity configured to execute the first application and communicate the first communication to the baseband circuity;
wherein the baseband circuitry is further configured to:
establish a packet data network, PDN, connection and generating an internet protocol, IP, socket for the first application in response to the first communication comprising a request for connectivity; and
determine a local IP address and a local port number assigned to the first application and communicating the local IP address and the local port number for the first application; and generate a mapping table to map the local IP address and the local port number to the first application.

## Patentansprüche

1. Nichtflüchtiges computerlesbares Medium, umfassend Anweisungen, die, wenn sie von einem oder mehreren Prozessoren eines Benutzergeräts, UE (101, 201, 301, 501, 800), für anwendungsspezifische Überlastungssteuerung für Datenkommunikation, ACDC, ausgeführt werden, wobei die Anweisungen das UE (101, 201, 301, 501, 800) konfigurieren zum:
Empfangen, auf einer Radio Resource Control, RRC, -Schicht (508) des UE (101, 201, 301, 501, 800) von einem Evolved Node B, eNB (150, 250, 350, 550), einer ACDC-Anzeige von ACDC-Parametern für eine oder mehrere ACDC-Kategorien;
Empfangen, an einer Non Access Stratum, NAS, -Schicht (506) des UE (101, 201, 301, 501, 800), einer ersten Kommunikation, die mit einer ersten Anwendung verknüpft ist;
Bestimmen, an der NAS-Schicht, einer Kategorie für die erste Anwendung aus einer Vielzahl von ACDC-Kategorien, basierend auf einem Open Mobile Alliance, OMA, Managementobjekt, OMA-MO, umfassend eine Vielzahl von Anwendungskategorien, die mit ACDC für ein drahtloses Kommunikationsnetzwerk verknüpft sind, wobei das OMA-MO Information für eine Abbildung von jeweiligen Anwendungs-IDs auf die Vielzahl von ACDC-Kategorien beinhaltet;
Anzeigen, durch die NAS-Schicht an die RRC-Schicht, der Kategorie für eine Zugriffsanfrage;
Identifizieren, an der RRC-Schicht, eines Satzes von aktuellen Überlastungssteuerungs-Parametern, die mit der Kategorie aus den empfangenen ACDC-Parametern für eine oder mehrere ACDC-Kategorien verknüpft sind;
Durchführen, an der RRC-Schicht, einer ACDC-Prüfung basierend auf dem aktuellen Satz von Überlastungssteuerungs-Parametern, die mit der Kategorie verknüpft sind; und
Verarbeiten der ersten Kommunikation basierend auf einem Ergebnis der ACDC-Prüfung.

2. Das nichtflüchtige computerlesbare Medium nach Anspruch 1, wobei die Anweisungen ferner das UE (101, 201, 301, 501, 800) konfigurieren zum:
Empfangen, an dem UE (101, 201, 301, 501, 800), von einem Evolved Node B, eNB (150, 250, 350, 550), des Open Mobile Alliance, OMA, Managementobjekts, OMA-MO.

3. Das nichtflüchtige computerlesbare Medium nach Anspruch 1 oder 2, wobei die Anweisungen ferner das UE (101, 201, 301, 501, 800) konfigurieren zum:
Empfangen, an einem Connectivity Manager, CM (504), des UE (101, 201, 301, 501, 800), von einer Anwendungsschicht des UE (101, 201, 301, 501, 800), einer ersten Kommunikation, die mit einer ersten Anwendung verknüpft ist;
wobei die erste Kommunikation durch die Non Access Stratum, NAS, -Schicht (506) des UE (101, 201, 301, 501, 800) über den CM (504) von der ersten Anwendung empfangen wird, wobei der Empfang der ACDC-Anzeige durch die Radio Resource Control, RRC, -Schicht des UE (101, 201, 301, 501, 800) verarbeitet wird.

4. Das nichtflüchtige computerlesbare Medium nach Anspruch 3, wobei die Anweisungen ferner das UE (101, 201, 301, 501, 800) konfigurieren zum Verarbeiten der ersten Kommunikation zum Identifizieren der Kategorie durch:
Senden der ersten Kommunikation von dem CM (504) an die NAS-Schicht (506) mit einer Anwendungskennung für die erste Anwendung;
Prüfen der Anwendungskennung an der NAS-Schicht (506) mit einer ACDC-Liste von dem OMA-MO zum Identifizieren der Kategorie als mit der ersten Anwendung verknüpft;
Senden der ersten Kommunikation von der NAS-Schicht (506) an die RRC-Schicht (508) mit einer Anzeige, die die Kategorie identifiziert,
wobei die Anweisungen das UE (101, 201, 301, 501, 800) konfigurieren zum Durchführen der ACDC-Prüfung durch:
Empfangen der ersten Kommunikation an der RRC-Schicht (508) von der NAS-Schicht (506) mit der Anzeige, die die Kategorie identifiziert; und
Durchführen der ACDC-Prüfung an der RRC-Schicht (508) zum Identifizieren eines anwendbaren Sperrmechanismus.

5. Das nichtflüchtige computerlesbare Medium nach Anspruch 4, wobei die Anweisungen das UE (101, 201, 301, 501, 800) konfigurieren zum Verarbeiten der ersten Kommunikation durch:
Basierend auf einer Bestimmung an der RRC-Schicht (508), dass die erste Anwendung durch die aktuellen Überlastungssteuerungs-Parameter, die mit der Kategorie verknüpft sind, vom Netzwerkzugriff ausgesperrt ist, Kommunizieren einer Ablehnung von der RRC-Schicht (508) an die NAS-Schicht (506).

6. Das nichtflüchtige computerlesbare Medium nach Anspruch 5, wobei die Ablehnung eine ACDC-Kategorie-Sperrabweisungsanzeige umfasst, wobei die Anweisungen das UE (101, 201, 301, 501, 800) konfigurieren zum Verarbeiten der ersten Kommunikation durch:
basierend auf einer Bestimmung an der RRC-Schicht (508), dass der ersten Anwendung durch die aktuellen Überlastungssteuerungs-Parameter, die mit der Kategorie verknüpft sind, Netzwerkzugriff erlaubt ist, Weiterleiten der ersten Kommunikation an eine Bitübertragungsschicht des UE (101, 201, 301, 501, 800).

7. Das nichtflüchtige computerlesbare Medium nach Anspruch 3-6, wobei die erste Kommunikation an dem Connectivity Manager, CM (504), als Teil eines Abfangens, durch den CM (504), jedes Anwendungsdatenpakets für jede Anwendung, die auf dem UE (101, 201,301, 501, 800) betrieben wird, empfangen wird, um unter Verwenden des Netzwerks übertragen zu werden, wobei der CM (504) alle Internetprotokoll-Sockets jedes Mal freigibt, wenn das UE (101, 201, 301, 501, 800) in einen RRC-Leerlaufzustand übergeht.

8. Das nichtflüchtige computerlesbare Medium nach Anspruch 1 bis 7, wobei die Anweisungen ferner das UE (101, 201, 301, 501, 800) konfigurieren zum:
Kommunizieren, von der Anwendungsschicht des UE (101, 201, 301, 501, 800), einer zweiten Kommunikation, die mit einer zweiten Anwendung verknüpft ist;
Verarbeiten der zweiten Kommunikation zum Bestimmen, dass die zweite Anwendung mit keiner Kategorie der Vielzahl von Anwendungskategorien verknüpft ist; und
basierend auf der Bestimmung, dass die zweite Anwendung mit keiner der Vielzahl von Anwendungskategorien verknüpft ist, Verarbeiten der zweiten Kommunikation unter Verwenden eines Satzes von Zugriffsklassensperrungs-, ACB-, Protokollen, die von den verschiedenen Sätzen von aktuellen Überlastungssteuerungs-Parametern getrennt sind.

9. Das nichtflüchtige computerlesbare Medium nach Anspruch 1 bis 8, wobei die Anweisungen ferner das UE (101, 201, 301, 501, 800) konfigurieren zum:
Kommunizieren einer zweiten Kommunikation, die mit einer zweiten Anwendung verknüpft ist, von der Anwendungsschicht des UE (101, 201, 301, 501, 800) an den Connectivity Manager des UE (101, 201, 301, 501, 800);
Verarbeiten der zweiten Kommunikation zum Bestimmen, dass die zweite Anwendung mit keiner Kategorie der Vielzahl von Anwendungskategorien verknüpft ist; und
basierend auf der Bestimmung, dass die zweite Anwendung mit keiner der Vielzahl von Anwendungskategorien verknüpft ist, Verarbeiten der zweiten Kommunikation unter Verwenden einer ACDC-Kategorie mit einer niedrigsten Priorität aus der Vielzahl von Anwendungskategorien.

10. Das nichtflüchtige computerlesbare Medium nach Anspruch 1 bis 9, wobei die erste Kommunikation ein Anwendungsdatenpaket umfasst und die Anweisungen ferner das UE (101, 201, 301, 501, 800) konfigurieren zum:
Einrichten einer Paketdatennetzwerk-, PDN-, Verbindung und Erzeugen eines Internetprotokoll-, IP-, Sockets für die erste Anwendung als Reaktion auf die Anfrage nach Konnektivität;
Bestimmen einer lokalen IP-Adresse und einer lokalen Portnummer, die der ersten Anwendung zugewiesen sind;
Kommunizieren der lokalen IP-Adresse und der lokalen Portnummer für die erste Anwendung an die NAS-Schicht (506); und
Erzeugen, durch die NAS-Schicht (506), einer Abbildungstabelle zum Abbilden der lokalen IP-Adresse und der lokalen Portnummer auf die erste Anwendung.

11. Das nichtflüchtige computerlesbare Medium nach Anspruch 10, wobei die Anweisungen ferner das UE (101, 201, 301, 501, 800) konfigurieren zum:
Empfangen, an einem Transmission Control Protocol, TCP/IP-Protokollstapel oder User Datagram Protocol, UDP/IP-Protokollstapel, von der ersten Anwendung, einer zweiten Kommunikation umfassend ein Anwendungsbenutzerdatenpaket;
Zustellen des Anwendungsbenutzerdatenpakets von dem TCP/IP-Protokollstapel oder UDP/IP-Protokollstapel an einen Radio Access Bearer, RAB, - Manager des UE (101, 201, 301,501, 800);
Zustellen, von dem RAB-Manager an die NAS-Schicht (506), der lokalen IP-Adresse und der lokalen Portnummer, die mit der zweiten Kommunikation verknüpft sind;
Durchführen, durch die NAS-Schicht (506), einer Abbildung von der lokalen IP-Adresse und der lokalen Portnummer auf eine Kennung für die erste Anwendung;
Durchführen, durch die NAS-Schicht (506), einer zweiten Abbildung von der Kennung für die erste Anwendung auf die Kategorie;
Kommunizieren, von der NAS-Schicht (506) an die RRC-Schicht (508), einer Dienstanfrage mit einer Anzeige, die die erste Kategorie identifiziert, an die RRC-Schicht (508);
Identifizieren, durch die RRC-Schicht (508), eines Satzes aktueller Überlastungssteuerungs-Parameter, die mit der Kategorie verknüpft sind;
Durchführen, durch die RRC-Schicht (508), einer ACDC-Prüfung basierend auf dem aktuellen Satz von Überlastungssteuerungs-Parametern, die mit der Kategorie verknüpft sind; und
Verarbeiten, durch die RRC-Schicht (508), der Dienstanfrage basierend auf dem Ergebnis der ACDC-Prüfung.

12. Das nichtflüchtige computerlesbare Medium nach Anspruch 10, wobei die Anweisungen ferner das UE (101, 201, 301, 501, 800) konfigurieren zum:
Verifizieren, durch den RAB-Manager, dass ein Satz von Funkträgern nicht für die erste Anwendung als Teil eines RRC-Leerlaufmodus des UE (101, 201, 301, 501, 800) eingerichtet ist;
Initiieren, durch den RAB-Manager vor Zustellung der zweiten Kommunikation an die NAS-Schicht (506), einer Anfrage an eine EPS-Mobilitätsverwaltungseinheit, EMM, der NAS-Schicht (506), um eine Dienstanfrageprozedur zu initiieren zum Einrichten des Satzes von Funkträgern für die erste Anwendung, wobei die Anfrage an die EMM die lokale IP-Adresse und die lokale Portnummer umfasst.

13. Vorrichtung eines Benutzergerätes, UE (101, 201, 301, 501, 800), umfassend: Funkfrequenzschaltung und Basisbandschaltung, die mit der Funkfrequenzschaltung gekoppelt ist, wobei die Basisbandschaltung konfiguriert ist zum:
Empfangen, an einer Radio Resource Control, RRC, -Schicht (508) des UE (101, 201, 301, 501, 800) von einem Evolved Node B, eNB, (150, 250, 350, 550), einer anwendungsspezifischen Überlastungssteuerung für Datenkommunikation, ACDC, - Anzeige von ACDC-Parameter für eine oder mehrere Kategorien;
Empfangen, an einer Non Access Stratum, NAS, -Schicht (506) des UE (101, 201, 301, 501, 800), einer ersten Kommunikation, die mit einer ersten Anwendung verknüpft ist;
Bestimmen, an der NAS-Schicht, einer Kategorie für die erste Anwendung aus einer Vielzahl von ACDC-Kategorien, basierend auf einem Open Mobile Alliance, OMA, -Managementobjekt, OMA-MO, umfassend eine Vielzahl von Anwendungskategorien, die mit ACDC für ein drahtloses Kommunikationsnetzwerk verknüpft sind, wobei das OMA-MO Information für eine Abbildung von jeweiligen Anwendungs-IDs auf die Vielzahl von ACDC-Kategorien beinhaltet;
Anzeigen, durch die NAS-Schicht an die RRC-Schicht, der Kategorie für eine Zugriffsanfrage;
Identifizieren, an der RRC-Schicht, eines Satzes von aktuellen Überlastungssteuerungs-Parametern, die mit der Kategorie aus den empfangenen ACDC-Parametern für eine oder mehrere AC-Kategorien verknüpft sind; und
Verarbeiten der ersten Kommunikation basierend auf einem Ergebnis der ACDC-Prüfung.

14. Vorrichtung nach Anspruch 13, ferner umfassend:
Anwendungsschaltung, die mit der Basisbandschaltung gekoppelt ist, wobei die Anwendungsschaltung konfiguriert ist zum Ausführen der ersten Anwendung und zum Kommunizieren der ersten Kommunikation an die Basisbandschaltung;
wobei die Basisbandschaltung ferner konfiguriert ist zum:
Einrichten einer Paketdatennetzwerk-, PDN-, Verbindung und Erzeugen eines Internetprotokoll-, IP-, Sockets für die erste Anwendung als Reaktion auf die erste Kommunikation umfassend eine Anfrage nach Konnektivität; und
Bestimmen einer lokalen IP-Adresse und einer lokalen Portnummer, die der ersten Anwendung zugewiesen sind, und Kommunizieren der lokalen IP-Adresse und der lokalen Portnummer für die erste Anwendung; und
Erzeugen einer Abbildungstabelle zum Abbilden der lokalen IP-Adresse und der lokalen Portnummer auf die erste Anwendung.

## Revendications

1. Un support non transitoire lisible par calculateur comprenant des instructions qui, quand elles sont exécutées par un ou plusieurs processeurs d'un équipement utilisateur, UE (101, 201, 301, 501, 800), servent au contrôle de congestion spécifique à l'application pour la communication de données, ACDC, dans lequel les instructions configurent l'UE (101, 201, 301, 501, 800) pour :
recevoir, au niveau d'une couche de contrôle de ressource radio, RRC, (508) de l'UE (101, 201, 301, 501, 800) à partir d'un nœud B évolué, eNB (150, 250, 350, 550), une indication ACDC de paramètres ACDC pour une ou plusieurs catégories ACDC ;
recevoir, au niveau d'une couche de couche non d'accès, NAS, (506) de l'UE (101, 201, 301, 501, 800), une première communication associée à une première application ;
déterminer, au niveau de la couche NAS, une catégorie pour la première application d'une pluralité de catégories ACDC sur la base d'un objet de gestion d'alliance mobile ouverte, OMA, OMA-MO, comprenant une pluralité de catégories d'application associées à ACDC pour un réseau de communication sans fil, dans lequel l'OMA-MO inclut une information pour une correspondance d'ID d'application respectifs à la pluralité de catégories ACDC ;
indiquer, par la couche NAS à la couche RRC, la catégorie pour une requête d'accès ;
identifier, au niveau de la couche RRC, un ensemble de paramètres de contrôle de congestion courants associés à la catégorie à partir des paramètres ACDC reçus pour une ou plusieurs catégories ACDC ;
réaliser, au niveau de la couche RRC, une vérification ACDC sur la base de l'ensemble courant de paramètres de contrôle de congestion associés à la catégorie ; et
traiter la première communication sur la base d'un résultat de la vérification ACDC.

2. Le support non transitoire lisible par calculateur selon la revendication 1, dans lequel les instructions configurent en outre l'UE (101, 201, 301, 501, 800) pour : recevoir, au niveau de l'UE (101, 201, 301, 501, 800) à partir d'un nœud B évolué, eNB (150, 250, 350, 550), l'objet de gestion d'alliance mobile ouverte, OMA, OMA-MO.

3. Le support non transitoire lisible par calculateur selon les revendications 1 ou 2, dans lequel les instructions configurent en outre l'UE (101, 201, 301, 501, 800) pour :
recevoir, au niveau d'un gestionnaire de connectivité, CM (504), de l'UE (101, 201, 301, 501, 800) à partir d'une couche d'application de l'UE (101, 201, 301, 501, 800), une première communication associée à une première application ;
dans lequel la première communication est reçue au niveau de la couche de couche non d'accès, NAS, (506) de l'UE (101, 201, 301, 501, 800) via le CM (504) à partir de la première application,
dans lequel la réception de l'indication ACDC est traitée par la couche de contrôle de ressource radio, RRC, de l'UE (101, 201, 301, 501, 800).

4. Le support non transitoire lisible par calculateur selon la revendication 3, dans lequel les instructions configurent en outre l'UE (101, 201, 301, 501, 800) pour traiter la première communication pour identifier la catégorie par :
envoi de la première communication du CM (504) à la couche NAS (506) avec un identificateur d'application pour la première application ;
vérification, au niveau de la couche NAS (506), de l'identificateur d'application avec une liste ACDC à partir de l'OMA-MO pour identifier la catégorie telle qu'associée à la première application ;
envoi de la première communication de la couche NAS (506) à la couche RRC (508) avec une indication identifiant la catégorie,
dans lequel les instructions configurent l'UE (101, 201, 301, 501, 800) pour réaliser la vérification ACDC par :
la réception de la première communication au niveau de la couche RRC (508) à partir de la couche NAS (506) avec l'indication identifiant la catégorie ; et
réalisation de la vérification ACDC au niveau de la couche RRC (508) pour identifier n'importe quel mécanisme d'interdiction applicable.

5. Le support non transitoire lisible par calculateur selon la revendication 4, dans lequel les instructions configurent l'UE (101, 201, 301, 501, 800) pour traiter la première communication par :
sur la base d'une détermination au niveau de la couche RRC (508) que la première application est interdite d'accès au réseau par les paramètres de contrôle de congestion courants associés à la catégorie, communication d'un rejet de la couche RRC (508) à la couche NAS (506).

6. Le support non transitoire lisible par calculateur selon la revendication 5, dans lequel le rejet comprend une indication de rejet interdit de catégorie ACDC, dans lequel les instructions configurent l'UE (101, 201, 301, 501, 800) pour traiter la première communication par :
sur la base d'une détermination au niveau de la couche RRC (508) que la première application est autorisée à l'accès au réseau par les paramètres de contrôle de congestion courants associés à la catégorie, transfert de la première communication à une couche physique de l'UE (101, 201, 301, 501, 800).

7. Le support non transitoire lisible par calculateur selon les revendications 3 à 6, dans lequel la première communication est reçue au niveau du gestionnaire de connectivité, CM (504), en tant que partie d'une interception, par le CM (504), de chaque paquet de données d'application pour chaque application fonctionnant sur l'UE (101, 201, 301, 501, 800) à transmettre en utilisant le réseau, dans lequel le CM (504) libère tous les sockets logiciels de protocole Internet chaque fois que l'UE (101, 201, 301, 501, 800) effectue une transition à un état inactif RRC.

8. Le support non transitoire lisible par calculateur selon les revendications 1 à 7, dans lequel les instructions configurent en outre l'UE (101, 201, 301, 501, 800) pour :
communiquer, à partir de la couche d'application de l'UE (101, 201, 301, 501, 800), une seconde communication associée à une seconde application ;
traiter la seconde communication pour déterminer que la seconde application n'est associée à aucune catégorie de la pluralité de catégories d'application ; et
sur la base de la détermination que la seconde application n'est associée à aucune de la pluralité de catégories d'application, traiter la seconde communication en utilisant un ensemble de protocoles d'interdiction de classe d'accès, ACB, séparé des différents ensembles de paramètres de contrôle de congestion courants.

9. Le support non transitoire lisible par calculateur selon les revendications là 8, dans lequel les instructions configurent en outre l'UE (101, 201, 301, 501, 800) pour :
communiquer, de la couche d'application de l'UE (101, 201, 301, 501, 800) au gestionnaire de connectivité de l'UE (101, 201, 301, 501, 800), une seconde communication associée à une seconde application ;
traiter la seconde communication pour déterminer que la seconde application n'est associée à aucune catégorie de la pluralité de catégories d'application ; et
sur la base de la détermination que la seconde application n'est associée à aucune de la pluralité de catégories d'application, traiter la seconde communication en utilisant une catégorie ACDC de plus basse priorité de la pluralité de catégories d'application.

10. Le support non transitoire lisible par calculateur selon les revendications 1 à 9, dans lequel la première communication comprend un paquet de données d'application et les instructions configurent en outre l'UE (101, 201, 301, 501, 800) pour :
établir une connexion de réseau de données par paquets, PDN, et générer un socket logiciel de protocole Internet, IP, pour la première application en réponse à la requête pour une connectivité ;
déterminer une adresse IP locale et un numéro de port local attribués à la première application ;
communiquer, à la couche NAS (506), l'adresse IP locale et le numéro de port local pour la première application ; et
générer, par la couche NAS (506), une table de mappage pour mapper l'adresse IP locale et le numéro de port local à la première application.

11. Le support non transitoire lisible par calculateur selon la revendication 10, dans lequel les instructions configurent en outre l'UE (101, 201, 301, 501, 800) pour :
recevoir, au niveau d'une pile de protocole de protocole de contrôle de transmission, TCP/IP, ou d'une pile de protocole de protocole de datagramme d'utilisateur, UDP/IP à partir de la première application, une seconde communication comprenant un paquet de données d'utilisateur d'application ;
délivrer, de la pile de protocole TCP/IP ou de la pile de protocole UDP/IP à un gestionnaire de support d'accès radio, RAB, de l'UE (101, 201, 301, 501, 800), le paquet de données d'utilisateur d'application ;
délivrer, du gestionnaire RAB à la couche NAS (506), l'adresse IP locale et le numéro de port local associés à la seconde communication ;
réaliser, par la couche NAS (506), un mappage de l'adresse IP locale et du numéro de port local à un identificateur pour la première application ;
réaliser, par la couche NAS (506), un second mappage de l'identificateur pour la première application à la catégorie ;
communiquer, de la couche NAS (506) à la couche RRC (508), une requête de service avec une indication identifiant la première catégorie à la couche RRC (508) ;
identifier, par la couche RRC (508), un ensemble de paramètres de contrôle de congestion courants associés à la catégorie ;
réaliser, par la couche RRC (508), une vérification ACDC sur la base de l'ensemble courant de paramètres de contrôle de congestion associés à la catégorie ; et
traiter, par la couche RRC (508), la requête de service sur la base du résultat de la vérification ACDC.

12. Le support non transitoire lisible par calculateur selon la revendication 10, dans lequel les instructions configurent en outre l'UE (101, 201, 301, 501, 800) pour :
vérifier, par le gestionnaire RAB, qu'un ensemble de supports radio n'est pas établi pour la première application en tant que partie d'un mode inactif RRC de l'UE (101, 201, 301, 501, 800) ;
initier, par le gestionnaire RAB avant la délivrance de la seconde communication à la couche NAS (506), une requête à une entité de gestion de mobilité EPS, EMM, de la couche NAS (506) pour initier une procédure de requête de service pour établir l'ensemble de supports radio pour la première application, dans lequel la requête à l'EMM comprend l'adresse IP locale et le numéro de port local.

13. Un appareil d'un équipement utilisateur, UE (101, 201, 301, 501, 800), comprenant :
une circuiterie radiofréquence et
une circuiterie de bande de base couplée à la circuiterie radiofréquence, dans lequel la circuiterie de bande de base est configurée pour :
recevoir, au niveau d'une couche de contrôle de ressource radio, RRC, (508) de l'UE (101, 201, 301, 501, 800) à partir d'un nœud B évolué, eNB (150, 250, 350, 550), une indication de contrôle de congestion spécifique à l'application pour la communication de données, ACDC, de paramètres ACDC pour une ou plusieurs catégories ACDC ;
recevoir, au niveau d'une couche de couche non d'accès, NAS, (506) de l'UE (101, 201, 301, 501, 800), une première communication associée à une première application ;
déterminer, au niveau de la couche NAS, une catégorie pour la première application d'une pluralité de catégories ACDC sur la base d'un objet de gestion d'alliance mobile ouverte, OMA, OMA-MO, comprenant une pluralité de catégories d'application associées à ACDC pour un réseau de communication sans fil, dans lequel l'OMA-MO inclut une information pour une correspondance d'ID d'application respectifs à la pluralité de catégories ACDC ;
indiquer, par la couche NAS à la couche RRC, la catégorie pour une requête d'accès ;
identifier, au niveau de la couche RRC, un ensemble de paramètres de contrôle de congestion courants associés à la catégorie à partir des paramètres ACDC reçus pour une ou plusieurs catégories AC ; et
traiter la première communication sur la base d'un résultat de la vérification ACDC.

14. L'appareil selon la revendication 13, comprenant en outre :
une circuiterie d'application couplée à la circuiterie de bande de base, la circuiterie d'application étant configurée pour exécuter la première application et
communiquer la première communication à la circuiterie de bande de base :
dans lequel la circuiterie de bande de base est configurée pour :
établir une connexion de réseau de données par paquets, PDN, et générer un socket logiciel de protocole Internet, IP, pour la première application en réponse à la première communication comprenant une requête pour une connectivité ; et
déterminer une adresse IP locale et un numéro de port local attribués à la première application et communiquer l'adresse IP locale et le numéro de port local pour la première application ; et
générer une table de mappage pour mapper l'adresse IP locale et le numéro de port local à la première application.
